(19) Europäisches Patentamt
European Patent Office
Office européen des brevets

(11) **EP 3 677 635 B1**

(12) **EUROPEAN PATENT SPECIFICATION**

(45) Date of publication and mention of the grant of the patent:
**08.03.2023 Bulletin 2023/10**

(21) Application number: **18852262.7**

(22) Date of filing: **29.08.2018**

(51) International Patent Classification (IPC):
***C08L 15/00*** *(2006.01)* ***B60C 1/00*** *(2006.01)*
***B60C 15/06*** *(2006.01)* ***C08K 3/04*** *(2006.01)*
***C08K 3/36*** *(2006.01)* ***C08L 7/00*** *(2006.01)*
***C08L 9/00*** *(2006.01)*

(52) Cooperative Patent Classification (CPC):
(C-Sets available)
**B60C 1/0016; C08L 7/00; C08L 9/00; C08L 15/00;**
B60C 2001/0058; B60C 2001/0066; C08L 9/06

(Cont.)

(86) International application number:
**PCT/JP2018/031912**

(87) International publication number:
**WO 2019/044889 (07.03.2019 Gazette 2019/10)**

(54) **TIRE RUBBER COMPOSITION**

KAUTSCHUKZUSAMMENSETZUNG FÜR REIFEN

COMPOSITION DE CAOUTCHOUC POUR PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2017 JP 2017168625**
**07.03.2018 JP 2018040834**

(43) Date of publication of application:
**08.07.2020 Bulletin 2020/28**

(73) Proprietor: **Kuraray Co., Ltd.**
**Okayama 710-0801 (JP)**

(72) Inventors:
- **KANBARA, Hiroshi**
**Kamisu-shi**
**Ibaraki 314-0197 (JP)**
- **KODA, Daisuke**
**Kamisu-shi**
**Ibaraki 314-0197 (JP)**

(74) Representative: **Müller-Boré & Partner Patentanwälte PartG mbB**
**Friedenheimer Brücke 21**
**80639 München (DE)**

(56) References cited:
**EP-A1- 2 716 700**
**EP-A1- 3 118 252**
**WO-A1-2018/043699**
**WO-A1-2018/043700**
**JP-A- S61 197 646**
**JP-A- S62 112 618**
**JP-A- 2013 249 359**
**JP-A- 2016 028 235**
**JP-A- 2016 060 789**
**JP-A- 2016 113 588**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
C08L 9/06, C08L 7/00, C08L 15/00, C08K 3/04,
C08K 3/36

## Description

TECHNICAL FIELD

The present invention relates to a tire rubber composition and to a tire tread, a bead filler, a tire belt and a pneumatic tire which each at least partially includes the composition.

BACKGROUND ART

Conventionally, rubber compositions are enhanced in mechanical strength by the addition of fillers such as carbon blacks and silicas to rubber components such as natural rubbers and styrene butadiene rubbers. Such rubber compositions are widely used in tire applications where abrasion resistance and mechanical strength are needed.

The fillers are known to exhibit their reinforcing effects by physically or chemically adsorbing the rubber components to the surface of the filler particles. Fillers having a large particle diameter of about 100 to 200 nm are generally incapable of sufficiently interacting with rubber components and thus sometimes fail to enhance the mechanical strength of rubber compositions to a sufficient extent. Further, such rubber compositions exhibit low hardness and sometimes cause unsatisfactory steering stability when used as tires.

On the other hand, fillers having a small average particle diameter of about 5 to 100 nm and a large specific surface area exhibit a higher interaction with rubber components and thus offer enhanced characteristics such as mechanical strength and abrasion resistance of rubber compositions. Further, such rubber compositions have high hardness and realize enhanced steering stability when used as tires.

However, it is known that carbon blacks or silicas with a small average particle diameter show high cohesive force, and particles of these fillers are poorly dispersed in rubber compositions. Such poor dispersibility of fillers leads to a prolonged kneading step and can adversely affect the productivity of rubber compositions. Further, rubber compositions with low dispersibility easily heat up and cause deteriorations in rolling resistance performance, and consequently often fail to satisfy characteristics which are required of so-called fuel efficient tires.

As discussed above, tire rubber compositions have a tradeoff between enhancements in mechanical strength and hardness, and enhancements in rolling resistance performance. It is considered difficult to improve all these performances in a well-balanced manner.

As an approach to improving the above characteristics with a good balance, Patent Literature 1 describes a heavy duty tire which includes a rubber composition made by blending two specific types of carbon blacks to a raw rubber including natural rubber and/or polyisoprene rubber, styrene-butadiene copolymer rubber, and polybutadiene rubber.

Further, Patent Literature 2 describes a tire rubber composition which includes 100 parts by mass of a rubber component including 5 mass% or more natural rubber, 5 to 200 parts by mass of silica, and 0.1 to 40 parts by mass of a cyclized rubber.

CITATION LIST

PATENT LITERATURE

Patent Literature 1: JP-A-2000-219778
Patent Literature 2: JP-A-2014-012768

SUMMARY OF INVENTION

TECHNICAL PROBLEM

Tires manufactured with the rubber compositions described in Patent Literatures 1 and 2 exhibit improved properties such as rolling resistance performance, strength and abrasion resistance, but their performances need further improvements.

The present invention has been made in light of the circumstances discussed above, and provides a tire rubber composition capable of giving crosslinked products having excellent properties including mechanical strength such as abrasion resistance, a crosslinked product of the composition, and a tire tread, a bead filler, a tire belt and a pneumatic tire which each partially include the composition or the crosslinked product and which each exhibit enhanced rolling resistance performance (low fuel consumption performance) and realize enhanced steering stability.

SOLUTION TO PROBLEM

The present inventors carried out extensive studies, and have consequently found that a tire rubber composition including specific components such as a specific modified liquid diene rubber can give crosslinked products with excellent properties such as abrasion resistance, and have also found that a tire tread, a bead filler, a tire belt and a pneumatic tire each partially including the composition or the crosslinked product exhibit enhanced rolling resistance performance and enhanced steering stability. The present invention has been completed based on the findings.
Specifically, the present invention pertains to the subject matter defined in the claims as described below.

[1] A tire rubber composition comprising 100 parts by mass of a solid rubber (A) having a glass transition temperature (Tg) of not more than -10°C, 0.1 to 50 parts by mass of a modified liquid diene rubber (B) having a functional group derived from a silane compound represented by the formula (1) below, and 20 to 200 parts by mass of a filler (C),

the modified liquid diene rubber (B) satisfying the following (i) to (iv):

(i) the weight average molecular weight (Mw) is 15,000 to 120,000,
(ii) the vinyl content is not more than 70 mol%,
(iii) the average number of the functional groups derived from the silane compound represented by the formula (1) below per molecule of the modified liquid diene rubber (B) is 1 to 30, and
(iv) the glass transition temperature (Tg) is not more than 0°C,

[Chem. 1]

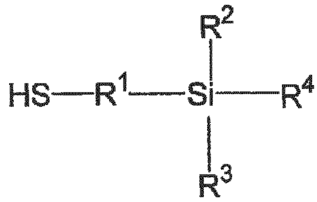

(1)

wherein $R^1$ is a $C_{1-6}$ divalent alkylene group, and $R^2$, $R^3$ and $R^4$ are each independently a methoxy group, an ethoxy group, a phenoxy group, a methyl group, an ethyl group or a phenyl group, with the proviso that at least one of $R^2$, $R^3$ and $R^4$ is a methoxy group, an ethoxy group or a phenoxy group, and
wherein the modified liquid diene rubber (B) is prepared by adding the silane compound represented by the formula (1) to an unmodified liquid diene rubber (B') which is free from modification with other functional groups.

[2] The tire rubber composition described in [1], wherein the melt viscosity of the modified liquid diene rubber (B) at 38°C is 1 to 4,000 Pa·s.
[3] The tire rubber composition described in [1] or [2], wherein the modified liquid diene rubber (B) is a polymer comprising a monomer unit derived from isoprene and/or butadiene.
[4] The tire rubber composition described in any one of [1] to [3], wherein the solid rubber (A) is one or more selected from natural rubbers, styrene butadiene rubbers, butadiene rubbers and isoprene rubbers.
[5] The tire rubber composition described in any one of [1] to [4], wherein the filler (C) is at least one selected from carbon blacks and silicas.
[6] A crosslinked product obtained by crosslinking the tire rubber composition described in any one of [1] to [5].
[7] A tire tread comprising, as at least a portion of the tire tread, the tire rubber composition described in any one of [1] to [5] or the crosslinked product described in [6].
[8] A bead filler comprising, as at least a portion of the bead filler, the tire rubber composition described in any one of [1] to [5] or the crosslinked product described in [6] .
[9] A tire belt comprising, as at least a portion of the tire belt, the tire rubber composition described in any one of [1] to [5] or the crosslinked product described in [6].
[10] A pneumatic tire comprising, as at least a portion of the pneumatic tire, the tire rubber composition described in any one of [1] to [5].
[11] The pneumatic tire described in [10], wherein the pneumatic tire is a winter tire or a studless tire.
[12] The pneumatic tire described in [10], wherein the pneumatic tire is an all-season tire.

ADVANTAGEOUS EFFECTS OF INVENTION

The tire rubber composition according to the present invention can give crosslinked products with excellent properties such as abrasion resistance. The composition or the crosslinked product can give, for example, a tire tread, a bead filler, a tire belt and a tire which each exhibit enhanced rolling resistance performance (low fuel consumption performance) and enhanced steering stability by virtue of its partially including the composition or the crosslinked product.

DESCRIPTION OF EMBODIMENTS

[Solid rubbers (A)]

The solid rubber (A) used in the tire rubber composition of the invention is a rubber that can be handled as a solid at 20°C. The Moony viscosity $ML_{1+4}$ of the solid rubber (A) at 100°C is usually in the range of 20 to 200. This rubber is usually selected from at least one of synthetic rubbers and natural rubbers.
Examples of the solid rubbers (A) include synthetic rubbers such as styrene butadiene rubbers (hereinafter, also written as "SBRs"), butadiene rubbers, isoprene rubbers, butyl rubbers, halogenated butyl rubbers, ethylene propylene diene rubbers, butadiene acrylonitrile copolymer rubbers, chloroprene rubbers, acrylic rubbers, fluororubbers and urethane rubbers; and natural rubbers. Of these solid rubbers (A), natural rubbers, SBRs, butadiene rubbers and isoprene rubbers are preferable, and natural rubbers, butadiene rubbers and SBRs are more preferable. The solid rubbers (A) may be used singly, or two or more may be used in combination.
To ensure that the obtainable rubber composition and crosslinked products will exhibit desired properties sufficiently, the number average molecular weight (Mn) of the solid rubber (A) is preferably not less than 80,000, and more preferably in the range of 100,000 to 3,000,000. In the present specification, the number average molecular weight is a polystyrene equivalent number average molecular weight measured by gel permeation chromatography (GPC).
From the point of view that the tire rubber composition of the invention is used as treads of snow tires (winter tires, studless tires) or treads of all-season tires, the glass transition temperature (Tg) of the solid rubber (A) measured by differential thermal analysis is not more than -10°C, preferably not more than -20°C, more preferably not more than -30°C, still more preferably not more than -40°C, further preferably not more than -45°C, particularly preferably not more than -50°C, and most preferably not more than -55°C. When the glass transition temperature is in this range, the tire rubber composition attains enhanced flexibility at low temperatures and thus the ice grip performance is enhanced. Here, the glass transition temperature (Tg) of the solid rubber (A) in the present invention is the glass transition temperature of a rubber component substantially making up the solid rubber (A). When, for example, the solid rubber (A) includes a plurality of rubber components, the glass transition temperatures of the plurality of rubber components substantially constituting the solid rubber (A) are each not more than -10°C. In the case where, for example, the rubber components substantially constituting the solid rubber (A) are STR20 (natural rubber from Thailand) and butadiene rubber, the glass transition temperatures of STR20 and butadiene rubber are both not more than -10°C.
The SBRs may be any such rubbers generally used in tire applications. Specifically, those rubbers having a styrene content of 0.1 to 70 mass% are preferable, and the styrene content is more preferably 5 to 60 mass%, still more preferably 5 to 50 mass%, further preferably 5 to 40 mass%, particularly preferably 5 to 30 mass%, and most preferably 5 to 25 mass%. Further, those rubbers having a vinyl content of 0.1 to 80 mass% are preferable, and those having a vinyl content of 5 to 70 mass% are more preferable.
The vinyl content in the SBRs in the present specification means the content of vinyl group-containing monomer units relative to all the butadiene-derived units contained in the SBR. Similarly, the vinyl content in the solid rubber (A) described later means the content of monomer units which actually have a vinyl group relative to the total amount of units from a monomer which can have a vinyl group depending on the bonding pattern.
The weight average molecular weight (Mw) of the SBRs is preferably 100,000 to 2,500,000, more preferably 150,000 to 2,000,000, and still more preferably 150,000 to 1,500,000. When the weight average molecular weight (Mw) of the SBR is in this range, the tire rubber composition attains enhanced processability and can give tires which exhibit enhanced ice grip performance and improved mechanical strength, abrasion resistance and steering stability. In the present specification, the weight average molecular weight is the polystyrene equivalent weight average molecular weight measured by gel permeation chromatography (GPC).
The glass transition temperature (Tg) of the SBRs measured by differential thermal analysis is not more than -10°C, preferably not more than -20°C, more preferably not more than -30°C, still more preferably not more than -40°C, further preferably not more than -45°C, particularly preferably not more than -50°C, and most preferably not more than -55°C. When the glass transition temperature is in this range, the tire rubber composition attains enhanced flexibility at low temperatures and thus the ice grip performance is enhanced.
SBR which may be used in the invention may be obtained by copolymerizing styrene and butadiene. The SBR production process is not particularly limited and may be any of emulsion polymerization, solution polymerization, gas-phase polymerization and bulk polymerization. Of these production processes, emulsion polymerization and solution polymerization are preferable.

An emulsion-polymerized styrene butadiene rubber (hereinafter, also written as E-SBR) may be produced by a usual emulsion polymerization process that is known or is deemed as known. For example, such a rubber may be obtained by emulsifying and dispersing prescribed amounts of styrene and butadiene monomers in the presence of an emulsifier and emulsion polymerizing the monomers with a radical polymerization initiator.

Examples of the emulsifiers which may be used include long-chain fatty acid salts having 10 or more carbon atoms, and rosin acid salts. Specific examples include potassium salts and sodium salts of fatty acids such as capric acid, lauric acid, myristic acid, palmitic acid, oleic acid and stearic acid.

Usually, water is used as the dispersion medium. The dispersion medium may include a water-soluble organic solvent such as methanol or ethanol as long as the stability during the polymerization is not impaired.

Examples of the radical polymerization initiators include persulfate salts such as ammonium persulfate and potassium persulfate, organic peroxides and hydrogen peroxide.

To control the molecular weight of the E-SBR that is obtained, a chain transfer agent may be used. Examples of the chain transfer agents include mercaptans such as t-dodecylmercaptan and n-dodecylmercaptan; carbon tetrachloride, thioglycolic acid, diterpene, terpinolene, $\gamma$-terpinene and $\alpha$-methylstyrene dimer.

The temperature of the emulsion polymerization may be selected appropriately in accordance with the type of the radical polymerization initiator used. In usual cases, the temperature is preferably 0 to 100°C, and more preferably 0 to 60°C. The polymerization mode may be continuous or batchwise. The polymerization reaction may be terminated by the addition of a polymerization terminator.

Examples of the polymerization terminators include amine compounds such as isopropylhydroxylamine, diethylhydroxylamine and hydroxylamine; quinone compounds such as hydroquinone and benzoquinone; and sodium nitrite.

The termination of the polymerization reaction may be followed by the addition of an antioxidant as required. After the termination of the polymerization reaction, the latex obtained is cleaned of the unreacted monomers as required, and the polymer is coagulated by the addition of a coagulant salt such as sodium chloride, calcium chloride or potassium chloride optionally together with an acid such as nitric acid or sulfuric acid to control the pH of the coagulated system to a predetermined value. The dispersion medium is then separated, thereby recovering the polymer as crumb. The crumb is washed with water, then dehydrated, and dried with a band dryer or the like to give E-SBR. During the coagulation process, the latex may be mixed together with an emulsified dispersion of an extender oil as required, and the rubber may be recovered as an oil-extended rubber. It is noted that an extender oil is not regarded as a component of the solid rubber (A) in the tire rubber composition in the present specification.

Examples of the commercially available E-SBRs include oil-extended styrene butadiene rubber "JSR1723" manufactured by JSR Corporation.

A solution polymerized styrene butadiene rubber (hereinafter, also written as S-SBR) may be produced by a usual solution polymerization process. For example, styrene and butadiene are polymerized in a solvent with an active metal capable of catalyzing anionic polymerization optionally in the presence of a polar compound as desired.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene and toluene. It is usually preferable to use the solvent in such an amount that the monomer concentration will be 1 to 50 mass%.

Examples of the active metals capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. Of these active metals, alkali metals and alkaline earth metals are preferable, and alkali metals are more preferable. Of the alkali metals, organoalkali metal compounds are more preferably used.

Examples of the organoalkali metal compounds include organomonolithium compounds such as n-butyllithium, sec-butyllithium, t-butyllithium, hexyllithium, phenyllithium and stilbenelithium; polyfunctional organolithium compounds such as dilithiomethane, 1,4-dilithiobutane, 1,4-dilithio-2-ethylcyclohexane and 1,3,5-trilithiobenzene; sodium naphthalene and potassium naphthalene. In particular, organolithium compounds are preferable, and organomonolithium compounds are more preferable. The amount in which the organoalkali metal compounds are used may be determined appropriately in accordance with the desired molecular weight of S-SBR. The organoalkali metal compound may be used in the form of an organoalkali metal amide by being subjected to a reaction with a secondary amine such as dibutylamine, dihexylamine or dibenzylamine.

The polar compounds are not particularly limited as long as the compounds do not deactivate the anionic polymerization reaction and are generally used for the purposes of controlling the microstructure of butadiene units and controlling the distribution of styrene in copolymer chains. Examples include ether compounds such as dibutyl ether, tetrahydrofuran and ethylene glycol diethyl ether; tertiary amines such as tetramethylethylenediamine and trimethylamine;

alkali metal alkoxides; and phosphine compounds.

The temperature of the polymerization reaction is usually in the range of -80 to 150°C, preferably 0 to 100°C, and more preferably 30 to 90°C. The polymerization mode may be batchwise or continuous. To enhance the random copolymerizability of styrene and butadiene, it is preferable to supply styrene and butadiene into the reaction liquid continuously or intermittently so that styrene and butadiene in the polymerization system will have a specific composition ratio.

The polymerization reaction may be terminated by the addition of an alcohol such as methanol or isopropanol as a polymerization terminator. After the termination of the polymerization reaction, the target S-SBR may be recovered by separating the solvent from the polymerization solution by a method such as direct drying or steam stripping. The polymerization solution may be mixed together with an extender oil before the removal of the solvent, and the rubber may be recovered as an oil-extended rubber.

As long as the advantageous effects of the invention are not impaired, the SBR may be a modified SBR obtained by introducing functional groups into SBR. Examples of the functional groups include amino groups, alkoxysilyl groups, hydroxyl groups, epoxy groups and carboxyl groups.

For example, the modified SBR may be produced by adding, before the addition of the polymerization terminator, an agent capable of reacting with active ends of the polymer, for example, a coupling agent such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane or 2,4-tolylene diisocyanate, a chain end-modifying agent such as 4,4'-bis(diethylamino)benzophenone or N-vinylpyrrolidone, or any of the modifying agents described in JP-A-2011-132298. In the modified SBR, the functional groups may be introduced at polymer ends or polymer side chains.

Examples of the isoprene rubbers which may be used include commercially available isoprene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. Ziegler-catalyzed isoprene rubbers are preferable because they have a high cis content. Use may be made of ultrahigh cis isoprene rubbers obtained using lanthanoid rare earth metal catalysts.

The vinyl content in the isoprene rubbers is preferably not more than 50 mass%, more preferably not more than 40 mass%, and still more preferably not more than 30 mass%. If the vinyl content exceeds 50 mass%, the rolling resistance performance tends to deteriorate. The lower limit of the vinyl content is not particularly limited. The glass transition temperature, although variable depending on the vinyl content, is preferably not more than -20°C, and more preferably not more than -30°C.

The weight average molecular weight (Mw) of the isoprene rubbers is preferably 90,000 to 2,000,000, and more preferably 150,000 to 1,500,000. This Mwensures that high processability and mechanical strength are obtained.

As long as the advantageous effects of the invention are not impaired, the isoprene rubbers may have branched partial structures or polar functional groups that are introduced by using polyfunctional modifiers, for example, tin tetrachloride, silicon tetrachloride, alkoxysilanes having an epoxy group in the molecule, or amino group-containing alkoxysilanes.

Examples of the butadiene rubbers which may be used include commercially available butadiene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. Ziegler-catalyzed butadiene rubbers are preferable because they have a high cis content. Use may be made of ultrahigh cis butadiene rubbers (for example, 95% or more cis content) obtained using lanthanoid rare earth metal catalysts.

The vinyl content in the butadiene rubbers is preferably not more than 50 mass%, more preferably not more than 40 mass%, and still more preferably not more than 30 mass%. If the vinyl content exceeds 50 mass%, the rolling resistance performance (low fuel consumption performance) and the abrasion resistance tend to deteriorate. The lower limit of the vinyl content is not particularly limited. The glass transition temperature, although variable depending on the vinyl content, is preferably not more than -40°C, and more preferably not more than -50°C.

The weight average molecular weight (Mw) of the butadiene rubbers is preferably 90,000 to 2,000,000, and more preferably 150,000 to 1,500,000. When the Mw is in this range, the tire rubber composition attains enhanced processability, and tires including the tire rubber composition as a portion thereof achieve enhancements in ice grip performance, abrasion resistance and steering stability.

As long as the advantageous effects of the invention are not impaired, the butadiene rubbers may have branched partial structures or polar functional groups that are introduced by using polyfunctional modifiers, for example, tin tetrachloride, silicon tetrachloride, alkoxysilanes having an epoxy group in the molecule, or amino group-containing alkoxysilanes.

At least one of the SBRs, the isoprene rubbers and the butadiene rubbers may be used in combination with

one, or two or more of, for example, butyl rubbers, halogenated butyl rubbers, ethylene propylene diene rubbers, butadiene acrylonitrile polymer rubbers and chloroprene rubbers. These rubbers may be produced by any methods without limitation, or may be purchased from the market.

Examples of the natural rubbers include those natural rubbers, high-purity natural rubbers and modified natural rubbers such as epoxidized natural rubbers, hydroxylated natural rubbers, hydrogenated natural rubbers and grafted natural rubbers generally used in the tire industry, with specific examples including TSRs (technically specified rubbers) such as SMRs (TSRs from Malaysia), SIRs (TSRs from Indonesia) and STRs (TSRs from Thailand), and RSSs (ribbed smoked sheets) . In particular, SMR 20, STR 20 and RSS #3 are preferable from the points of view of uniform quality and high availability. The natural rubbers may be used singly, or two or more may be used in combination. In the present invention, the synthetic rubbers and the natural rubbers may be used together.

[Modified liquid diene rubbers (B)]

The modified liquid diene rubber (B) used in the inventive tire rubber composition is a liquid polymer which has a weight average molecular weight (Mw) in the range of 15,000 to 120,000, has a vinyl content of not more than 70 mol%, has a functional group derived from a silane compound represented by the aforementioned formula (1), the average number of said functional groups per molecule of the modified liquid diene rubber (B) being 1 to 30, and has a glass transition temperature (Tg) in the range of 0°C and less, and is prepared by adding the silane compound represented by the formula (1) to an unmodified liquid diene rubber (B') which is free from modification with other functional groups. In the tire rubber composition of the present invention, the modified liquid diene rubber (B) probably allows the components such as the filler (C) to be dispersed in the rubber composition in a state that is ideal for a crosslinked product to exhibit enhanced properties (for example, enhanced abrasion resistance, enhanced rolling resistance performance and enhanced steering stability). Further, the rubber composition containing this component gives crosslinked products having excellent mechanical strength such as abrasion resistance. Furthermore, the crosslinked products used as, for example, tires or the like exhibit enhanced rolling resistance performance and offer enhanced steering stability. Although detailed mechanisms are not clear, it is probable that the modified liquid diene rubber (B) in the rubber composition has high reactivity with the filler (C) described later and easily bonds to the filler (C) to reduce the occurrence of aggregation of the filler (C), and allows the filler (C) to be dispersed in the rubber composition in a state that is ideal for the enhancements in properties. Furthermore, the modified liquid diene rubber (B) will be highly entangled with the solid rubber so that crosslinked products obtained from the rubber composition attain excellent mechanical strength such as abrasion resistance.

The unmodified liquid diene rubber (B') that is a raw material for the modified liquid diene rubber (B) contains conjugated diene units as monomer units constituting the polymer. Examples of the conjugated dienes include butadiene; isoprene; and conjugated dienes (b1) except butadiene and isoprene, such as 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, and myrcene. The conjugated diene units in the unmodified liquid diene rubber (B') preferably include monomer units derived from butadiene and/or isoprene.

The unmodified liquid diene rubber (B') serving as a raw material for the modified liquid diene rubber (B) preferably contains monomer units derived from butadiene and/or isoprene in an amount of not less than 50 mass% relative to all the monomer units constituting the polymer. The total content of butadiene units and isoprene units is preferably 60 to 100 mass%, and more preferably 70 to 100 mass% relative to all the monomer units forming the unmodified liquid diene rubber (B'). The total content of butadiene units and isoprene units may be determined in consideration of factors such as the compatibility with the solid rubber (A). When, for example, the solid rubber (A) includes butadiene rubber, isoprene rubber or natural rubber as a component, it is preferable that the total content of butadiene units and isoprene units be 100 mass%.

In addition to the butadiene units and the isoprene units, the unmodified liquid diene rubber (B') may include additional monomer units such as units from the aforementioned conjugated dienes (b1) other than butadiene and isoprene, and units from aromatic vinyl compounds (b2). When, in particular, the solid rubber (A) includes an SBR component, the addition of units from an aromatic vinyl compound (b2) to the unmodified liquid diene rubber (B') is expected to effectively enhance the compatibility of the modified liquid diene rubber (B) with the solid rubber (A).

Examples of the aromatic vinyl compounds (b2) include styrene, $\alpha$-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, and divinylbenzene. Of these aromatic vinyl compounds, styrene, $\alpha$-methylstyrene and 4-methylstyrene are preferable.

In the unmodified liquid diene rubber (B'), the content of the additional monomer units other than the butadiene and isoprene units is not more than 50 mass%, more preferably not more than 40 mass%, and still more preferably not more than 30 mass%. When, for example, the content of vinyl aromatic compound (b2) units is within the above range,

the processability of the rubber composition tends to be enhanced.

The unmodified liquid diene rubber (B') is preferably a polymer obtained by polymerizing a conjugated diene and optionally additional monomers other than conjugated dienes by a process such as, for example, emulsion polymerization or solution polymerization.

The emulsion polymerization process may be a known process or a process that is deemed as known. For example, monomers including a prescribed amount of the conjugated diene may be emulsified and dispersed in the presence of an emulsifier and may be emulsion polymerized with use of a radical polymerization initiator.

Examples of the emulsifiers include long-chain fatty acid salts having 10 or more carbon atoms, and rosin acid salts. Examples of the long-chain fatty acid salts include potassium salts and sodium salts of fatty acids such as capric acid, lauric acid, myristic acid, palmitic acid, oleic acid and stearic acid.

Usually, water is used as the dispersion medium. The dispersion medium may include a water-soluble organic solvent such as methanol or ethanol as long as the stability during the polymerization is not impaired.

Examples of the radical polymerization initiators include persulfate salts such as ammonium persulfate and potassium persulfate, organic peroxides and hydrogen peroxide.

To control the molecular weight of the obtainable unmodified liquid diene rubber (B'), a chain transfer agent may be used. Examples of the chain transfer agents include mercaptans such as t-dodecylmercaptan and n-dodecylmercaptan; carbon tetrachloride, thioglycolic acid, diterpene, terpinolene, $\gamma$-terpinene and $\alpha$-methylstyrene dimer.

The temperature of the emulsion polymerization may be selected appropriately in accordance with, for example, the type of the radical polymerization initiator used. The temperature is usually in the range of 0 to 100°C, and preferably in the range of 0 to 60°C. The polymerization mode may be continuous or batchwise.

The polymerization reaction may be terminated by the addition of a polymerization terminator. Examples of the polymerization terminators include amine compounds such as isopropylhydroxylamine, diethylhydroxylamine and hydroxylamine, quinone compounds such as hydroquinone and benzoquinone, and sodium nitrite.

The termination of the polymerization reaction may be followed by the addition of an antioxidant as required. After the termination of the polymerization reaction, the latex obtained is cleaned of the unreacted monomers as required, and the unmodified liquid diene rubber (B') is coagulated by the addition of a coagulant salt such as sodium chloride, calcium chloride or potassium chloride optionally together with an acid such as nitric acid or sulfuric acid to control the pH of the coagulated system to a predetermined value. The dispersion medium is then separated, thereby recovering the polymer. Next, the polymer is washed with water, dehydrated and dried. In this manner, the unmodified liquid diene rubber (B') may be obtained. During the coagulation process, the latex may be mixed together with an emulsified dispersion of an extender oil as required, and the unmodified liquid diene rubber (B') may be recovered as an oil-extended rubber.

The solution polymerization process may be a known process or a process that is deemed as known. For example, monomers including the conjugated diene are polymerized in a solvent with a Ziegler catalyst, a metallocene catalyst or an active metal or an active metal compound capable of catalyzing anionic polymerization, optionally in the presence of a polar compound as desired.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene, toluene and xylene.

Examples of the active metals capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. Of the active metals capable of catalyzing anionic polymerization, alkali metals and alkaline earth metals are preferable, and alkali metals are more preferable.

Preferred active metal compounds capable of catalyzing anionic polymerization are organoalkali metal compounds. Examples of the organoalkali metal compounds include organomonolithium compounds such as methyllithium, ethyllithium, n-butyllithium, sec-butyllithium, t-butyllithium, hexyllithium, phenyllithium and stilbenelithium; polyfunctional organolithium compounds such as dilithiomethane, dilithionaphthalene, 1,4-dilithiobutane, 1,4-dilithio-2-ethylcyclohexane and 1,3,5-trilithiobenzene; sodium naphthalene and potassium naphthalene. Of these organoalkali metal compounds, organolithium compounds are preferable, and organomonolithium compounds are more preferable.

The amount in which the organoalkali metal compounds are used may be determined appropriately in accordance with factors such as the melt viscosities and molecular weights of the unmodified liquid diene rubber (B') and the modified liquid diene rubber (B) . Usually, the amount of such compounds is 0.01 to 3 parts by mass per 100 parts by mass of all the monomers including the conjugated diene.

The organoalkali metal compound may be used in the form of an organoalkali metal amide by being subjected to a reaction with a secondary amine such as dibutylamine, dihexylamine or dibenzylamine.

The polar compounds are usually used in the anionic polymerization for the purpose of controlling the microstructure (for example, the vinyl content) of conjugated diene units without deactivating the reaction. Examples of the polar compounds include ether compounds such as dibutyl ether, tetrahydrofuran and ethylene glycol diethyl ether;

tertiary amines such as N,N,N',N'-tetramethylethylenediamine and trimethylamine; alkali metal alkoxides and phosphine compounds. The polar compounds are usually used in an amount of 0.01 to 1000 mol per mol of the organoalkali metal compound.

The temperature of the solution polymerization is usually in the range of -80 to 150°C, preferably 0 to 100°C, and more preferably 10 to 90°C. The polymerization mode may be batchwise or continuous.

The polymerization reaction may be terminated by the addition of a polymerization terminator. Examples of the polymerization terminators include alcohols such as methanol and isopropanol. The unmodified liquid diene rubber (B') may be isolated by pouring the polymerization reaction liquid into a poor solvent such as methanol to precipitate the unmodified liquid diene rubber (B'), or by washing the polymerization reaction liquid with water followed by separation and drying.

Of the processes described above for the production of the unmodified liquid diene rubber (B'), the solution polymerization process is preferable.

The unmodified liquid diene rubber (B') obtained as described above may be directly (without hydrogenation) subjected to the modification with functional groups derived from a silane compound represented by the formula (1) described later, or may be modified after at least part of the unsaturated bonds present in the liquid diene rubber are hydrogenated.

To ensure that the functional groups derived from a silane compound represented by the formula (1) described later will exhibit their characteristics more favorably, the unmodified liquid diene rubber (B') is free from modification with other functional groups (such as, for example, hydroxyl groups). When the unmodified liquid diene rubber (B') is free from modification with functional groups, the modified liquid diene rubber (B) that is obtained tends to attain higher stability. Further, the modified liquid diene rubber (B) that is obtained tends to exhibit higher interaction (for example, reactivity) between its functional groups derived from a silane compound represented by the formula (1) and the filler (C) (for example, silica).

The unmodified liquid diene rubber (B') is modified with a functional group derived from a silane compound represented by the formula (1) below (hereinafter, also written as the silane compound (1)) into the modified liquid diene rubber (B) .

[Chem. 2]

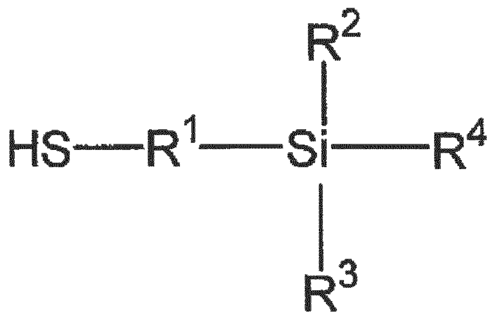

(1)

In the formula (1), $R^1$ is a $C_{1-6}$ divalent alkylene group. Examples of the $C_{1-6}$ divalent alkylene groups include methylene group, ethylene group, propylene group, butylene group, pentylene group and hexylene group. $R^2$, $R^3$ and $R^4$ are each independently a methoxy group, an ethoxy group, a phenoxy group, a methyl group, an ethyl group or a phenyl group, with the proviso that at least one of $R^2$, $R^3$ and $R^4$ is a methoxy group, an ethoxy group or a phenoxy group.

Examples of the silane compounds (1) include mercaptomethylenemethyldiethoxysilane, mercaptomethylenetriethoxysilane, 2-mercaptoethyltrimethoxysilane, 2-mercaptoethyltriethoxysilane, 2-mercaptoethylmethoxydimethylsilane, 2-mercaptoethylethoxydimethylsilane, 3-mercaptopropyltrimethoxysilane, 3-mercaptopropyltriethoxysilane, 3-mercaptopropyldimethoxymethylsilane, 3-mercaptopropyldiethoxymethylsilane, 3-mercaptopropyldimethoxyethylsilane, 3-mercaptopropyldiethoxyethylsilane, 3-mercaptopropylmethoxydimethylsilane and 3-mercaptopropylethoxydimethylsilane. The silane compounds may be used singly, or two or more may be used in combination.

The mercapto group (-SH) of the silane compound (1) is radically added to a carbon-carbon unsaturated bond present in the unmodified liquid diene rubber (B'). The resultant modified liquid diene rubber (B) has the functional group derived from the silane compound (1), specifically, a functional group that is the partial structure represented by the following formula (2):

[Chem. 3]

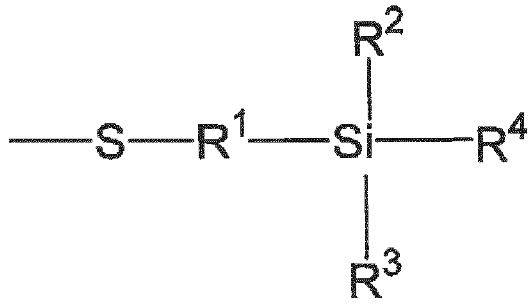

(2)

Details such as definitions and specific examples of $R^1$, $R^2$, $R^3$ and $R^4$ in the formula (2) are the same as those of $R^1$, $R^2$, $R^3$ and $R^4$ in the formula (1) .

The average number of the functional groups derived from the silane compound (1) per molecule of the modified liquid diene rubber (B) is 1 to 30, preferably 1 to 25, and more preferably 1 to 20. If the average number of the functional groups is less than 1, the rubber exhibits a low affinity for the filler (C) and fails to improve the dispersibility of the filler in the rubber composition, with the result that crosslinked products obtained from the rubber composition sometimes fail to attain the desired enhancements in properties, for example, in abrasion resistance, rolling resistance performance and steering stability. If, on the other hand, the average number of the functional groups is more than 30, the rubber composition gives a crosslinked product which does not attain the desired properties enhancements and which tends to be deteriorated in properties, for example, in abrasion resistance, rolling resistance performance and steering stability.

The average number of functional groups per molecule of the modified liquid diene rubber (B) may be calculated from the functional group equivalent weight (g/eq) and the styrene equivalent number average molecular weight Mn of the modified liquid diene rubber (B).

(Average number of functional groups per molecule) = [(Number average molecular weight Mn)/(Molecular weight of styrene unit) × (Average molecular weight of units of conjugated diene and optional monomers other than conjugated dienes)]/(Functional group equivalent weight)

The functional group equivalent weight of the modified liquid diene rubber (B) indicates the mass of butadiene and optional monomers other than butadiene that are bonded together per one functional group. The functional group equivalent weight may be calculated from the ratio of the area of the peak assigned to the polymer main chains to the area of the peak assigned to the functional groups using $^1$H-NMR or $^{13}$C-NMR. The peak assigned to the functional groups is a peak assigned to alkoxy groups.

The amount of the silane compound (1) added in the modified liquid diene rubber (B) is preferably 0.3 to 100 parts by mass per 100 parts by mass of the unmodified liquid diene rubber (B'), and is more preferably 1 to 60 parts by mass, still more preferably 1 to 50 parts by mass, further preferably 1 to 40 parts by mass, and particularly preferably 1 to 20 parts by mass. If the amount of the modifying agent added is larger than 100 parts by mass, the modified liquid diene rubber tends to exhibit poor reactivity with the filler (C) and tends not to effectively improve the dispersibility of the filler (C), the processability tends to be deteriorated, and a crosslinked product that is obtained tends to be low in abrasion resistance. If the amount is less than 0.3 parts by mass, the dispersibility of the filler (C) tends not to be effectively improved and the components such as the filler (C) tend not to be allowed to be dispersed in a state that is ideal for a crosslinked product to attain enhanced properties. The amount of the silane compound (1) added in the modified liquid diene rubber (B) may be determined with various analyzers such as, for example, a nuclear magnetic resonance spectrometer.

The silane compound (1) may be added to the unmodified liquid diene rubber (B') by any method without limitation. For example, the silane compound (1) and optionally a radical catalyst as required may be added to the liquid diene rubber and the mixture may be heated in the presence of or without an organic solvent. The radical generator that is used is not particularly limited and may be any of, among others, organic peroxides, azo compounds and hydrogen

peroxide that are usually available in the market. It is undesirable that the reaction which adds the silane compound (1) to the unmodified liquid diene rubber (B') be performed by heating alone without using a radical generator. If, for example, the heating temperature is excessively low, the addition reaction does not take place sufficiently and the average number of the functional groups per molecule does not sometimes reach the desired range. When the heating temperature is high, the addition reaction can proceed but is sometimes accompanied by the generation of radicals on the polymer main chains and the consequent molecular weight-increasing reaction of the polymer, with the result that the Mw of the modified liquid diene rubber does not sometimes fall in the desired range or the viscosity of the modified liquid diene rubber does not sometimes fall in the desired range. In the case where the modified liquid diene rubber is obtained by addition reaction at a high temperature, the rubber is sometimes poorly handleable due to high viscosity, and sometimes exhibits lowered reactivity with silica to cause adverse effects on properties of the tire rubber composition that is obtained. By using a radical generator in the addition reaction, the addition reaction is allowed to proceed to a sufficient extent even at a relatively low temperature while sufficiently suppressing side reactions such as molecular weight-increasing reaction.

Provided that the total area of peaks assigned to polymer components in a GPC chromatogram obtained by GPC measurement of the modified liquid diene rubber (B) is 100%, the proportion of polymer components having a molecular weight of Mt $\times$ 1.45 or above is preferably in the range of 0 to 30%, more preferably in the range of 0 to 25%, still more preferably in the range of 0 to 20%, and particularly preferably in the range of 0 to 18% wherein Mt is the peak-top molecular weight of the modified liquid diene rubber (B) measured by GPC relative to polystyrenes . The incorporation of such a modified liquid diene rubber (B) results in good processability of the rubber composition. Further, such a modified liquid diene rubber exhibits enhanced affinity for the filler (C) described later in the obtainable rubber composition and thus can be easily present near the filler (C) during the preparation of the rubber composition. Probably as a result of these, the modified liquid diene rubber contributes to enhancing the dispersibility of the filler (C) . Thus, the components such as the filler (C) are allowed to be dispersed in a crosslinked product in a state that is ideal for the crosslinked product to attain enhanced properties. Further, the facilitated access of the modified liquid diene rubber (B) to the vicinity of the filler (C) leads to excellent abrasion resistance of crosslinked products that are obtained.

Examples of the organic peroxides include methyl ethyl ketone peroxide, cyclohexanone peroxide, 3,3,5-trimethylcyclohexanone peroxide, methylcyclohexanone peroxide, acetylacetone peroxide, 1,1-bis(t-butylperoxy)-3,3,5-trimethylcyclohexane, 1,1-bis(t-butylperoxy)cyclohexane, 1,1-bis(t-hexylperoxy)cyclohexane, 2,2-bis(t-butylperoxy)butane, t-butylhydroperoxide, cumenehydroperoxide, diisopropylbenzene hydroperoxide, p-menthane hydroperoxide, 2,5-dimethylhexane 2,5-dihydroperoxide, 1,1,3,3-tetramethylbutyl hydroperoxide, di-t-butyl peroxide, t-butylcumyl peroxide, dicumyl peroxide, bis(t-butylperoxyisopropyl)benzene, 2,5-dimethyl-2,5-di(t-butylperoxy)hexane, 2,5-hexanoyl peroxide, lauroyl peroxide, succinic acid peroxide, benzoyl peroxide and derivatives thereof, 2,4-dichlorobenzoyl peroxide, m-toluoyl peroxide, diisopropyl peroxydicarbonate, t-butyl-2-ethyl hexanoate, di-2-ethylhexyl peroxydicarbonate, dimethoxyisopropyl peroxycarbonate, di(3-methyl-3-methoxybutyl) peroxydicarbonate, t-butyl peroxyacetate, t-butyl peroxypivalate, t-butyl peroxyneodecanoate, t-butyl peroxyoctanoate, t-butyl peroxy-3,3,5-trimethylhexanoate, t-butyl peroxylaurate, t-butyl peroxycarbonate, t-butyl peroxybenzoate and t-butyl peroxyisobutyrate.

Examples of the azo compounds include 2,2'-azobisisobutyronitrile, 1,1'-azobis(cyclohexane-1-carbonitrile), 2,2'-azobis(2-methylbutyronitrile), 2,2'-azobis(2,4-dimethylvaleronitrile), 2,2'-azobis(2,4-dimethyl-4-methoxyvaleronitrile), 2,2'-azobis(2-(2-imidazolin-2-yl)propane), 2,2'-azobis(2,4,4-trimethylpentane), 2,2'-azobis(2-methylpropane), 2,2'-azobis(2-hydroxymethylpropionitrile), 4,4'-azobis(4-cyanovaleric acid), dimethyl 2,2'-azobis(2-methylpropionate), 2-cyano-2-propylazoformamide and 2-phenylazo-4-methoxy-2,4-dimethylvaleronitrile.

For example, the organic solvent used in the above method is usually a hydrocarbon solvent or a halogenated hydrocarbon solvent. Of these organic solvents, hydrocarbon solvents such as n-butane, n-hexane, n-heptane, cyclohexane, benzene, toluene and xylene are preferable.

For purposes such as to suppress side reactions during the addition reaction of the modifying agent by the aforementioned method, an antioxidant may be added.

Some preferred examples of the antioxidants used for such purposes include 2,6-di-t-butyl-4-methylphenol (BHT), 2,2'-methylenebis(4-methyl-6-t-butylphenol), 4,4'-thiobis(3-methyl-6-t-butylphenol), 4,4'-butylidenebis(3-methyl-6-t-butylphenol) (AO-40), 3,9-bis[1,1-dimethyl-2-[3-(3-t-butyl-4-hydroxy-5-methylphe nyl)propionyloxy]ethyl]-2,4,8,10-tetraoxaspiro[5.5]undecan e (AO-80), 2,4-bis[(octylthio)methyl]-6-methylphenol (Irganox 1520L), 2,4-bis[(dodecylthio)methyl]-6-methylphenol (Irganox 1726), 2- [1-(2-hydroxy-3,5-di-t-pentylphenyl)ethyl]-4,6-di-t-pent ylphenyl acrylate (Sumilizer GS), 2-t-butyl-6-(3-t-butyl-2-hydroxy-5-methylbenzyl)-4-methylp henyl acrylate (Sumilizer GM), 6-t-butyl-4-[3-(2,4,8,10-tetra-t-butyldibenzo[d,f] [1,3,2]d ioxaphosphepin-6-yloxy)propyl]-2-methylphenol (Sumilizer GP), tris(2,4-di-t-butylphenyl) phosphite (Irgafos 168), dioctadecyl 3,3'-dithiobispropionate, hydroquinone, p-methoxyphenol, N-phenyl-N'-(1,3-dimethylbutyl)-p-phenylenediamine (Nocrac 6C), bis(2,2,6,6-tetramethyl-4-piperidyl) sebacate (LA-77Y), N,N-dioctadecylhydroxylamine (Irgastab FS 042) and bis(4-t-octylphenyl)amine (Irganox 5057). The antioxidants may be used singly, or two or more may be used in combination.

The amount of the antioxidants added is preferably 0 to 10 parts by mass, and more preferably 0 to 5 parts by

mass per 100 parts by mass of the unmodified liquid diene rubber (B').

In the modified liquid diene rubber (B), the functional groups may be introduced at polymer ends or polymer side chains . The introduction sites are preferably polymer side chains in view of the fact that a plurality of functional groups can be introduced easily. The functional groups may belong to a single kind or may be a mixture of two or more kinds. That is, the modified liquid diene rubber (B) may be modified with a single kind of the modifying agent or with two or more kinds of the modifying agents.

The ratio in which the unmodified liquid diene rubber (B') and the silane compound (1) are mixed together may be selected appropriately so that, for example, the modified liquid diene rubber (B) will have the desired average number of the functional groups per molecule. For example, the unmodified liquid diene rubber (B') and the silane compound (1) may be mixed in a mass ratio (B')/(1) of 1 to 300, and may be mixed in a mass ratio (B')/(1) of, for example, 0.3 to 300.

An effective approach to producing the modified liquid diene rubber (B) with the specified properties is to react the unmodified diene rubber with the silane compound (1) by radical addition reaction at an appropriate reaction temperature for a sufficient amount of reaction time. For example, the addition reaction of the silane compound (1) to the unmodified liquid diene rubber (B') preferably takes place at a temperature of 10 to 200°C, more preferably 50°C to 180°C, and still more preferably 50°C to 140°C. The reaction time is preferably 1 to 200 hours, more preferably 1 to 100 hours, still more preferably 1 to 50 hours, and further preferably 1 to 25 hours .

The melt viscosity of the modified liquid diene rubber (B) at 38°C is preferably 1 to 4,000 Pa·s, more preferably 1 to 3,500 Pa·s, still more preferably 1 to 3,000 Pa·s, further preferably 1 to 2,000 Pa·s, and particularly preferably 1 to 1,000 Pa·s. When the melt viscosity of the modified liquid diene rubber (B) is in the above range, the rubber composition that is obtained attains enhanced flexibility and thus exhibits higher processability. The modified liquid diene rubber (B) having this specific melt viscosity may be effectively synthesized by adding a radical catalyst during the modification reaction and performing the reaction at a low reaction temperature for a short time. In the present invention, the melt viscosity of the modified liquid diene rubber (B) is a value measured with a Brookfield viscometer at 38°C.

The weight average molecular weight (Mw) of the modified liquid diene rubber (B) is 15, 000 to 120,000, preferably 15, 000 to 100,000, more preferably 15,000 to 80,000, and still more preferably 15,000 to 60,000. In the invention, the Mw of the modified liquid diene rubber (B) is the weight average molecular weight measured by gel permeation chromatography (GPC) relative to polystyrenes. The above range of the Mw of the modified liquid diene rubber (B) ensures that the process flow efficiency during production is enhanced and good economic efficiency is obtained, and that the rubber composition of the invention attains good processability. Further, such a modified liquid diene rubber attains enhanced affinity for the filler (C) described later in the obtainable rubber composition and thus can be located more easily near the filler (C) during the preparation of the rubber composition. Probably as a result of these, the modified liquid diene rubber contributes to enhancing the dispersibility of the filler (C) . Thus, the components such as the filler (C) are allowed to be dispersed in a crosslinked product in a state that is ideal for the crosslinked product to attain enhanced properties. Further, as a result of the facilitated access of the modified liquid diene rubber (B) to the vicinity of the filler (C), crosslinked products with excellent abrasion resistance are obtained. Furthermore, the modified liquid diene rubber can be easily co-vulcanized together with the solid rubber, and consequently the modified liquid diene rubber is less likely to bleed out from the blend, thereby lessening properties deteriorations over time. By virtue of these advantages, articles such as, for example, tires formed of crosslinked products of the composition exhibit good performances such as rolling resistance performance and steering stability, and have small properties deteriorations over time. In the present invention, two or more kinds of the modified liquid diene rubbers (B) having different molecular weights Mw may be used in combination.

The molecular weight distribution (Mw/Mn) of the modified liquid diene rubber (B) is preferably 1.0 to 20.0, more preferably 1.0 to 15.0, and still more preferably 1.0 to 10.0. This Mw/Mn is advantageous in that the obtainable modified liquid diene rubber (B) has a small variation in viscosity. The molecular weight distribution (Mw/Mn) is the ratio of weight average molecular weight (Mw) to number average molecular weight (Mn) measured by GPC relative to polystyrene standards.

The vinyl content in the modified liquid diene rubber (B) is not more than 70 mol%, and, from the points of view of abrasion resistance, low fuel consumption performance and ice grip performance, is preferably less than 50 mol%, more preferably less than 40 mol%, still more preferably less than 35 mol%, further preferably less than 30 mol%, particularly preferably less than 25 mol%, and most preferably less than 20 mol%. From the points of view of steering stability, dry grip performance and wet grip performance, the vinyl content in the modified liquid diene rubber (B) is preferably not less than 20 mol%, more preferably not less than 30 mol%, still more preferably not less than 35 mol%, further preferably not less than 40 mol%, particularly preferably not less than 45 mol%, and most preferably not less than 50 mol%. In the present invention, the "vinyl content" means the total molar percentage of 1,2-bonded or 3,4-bonded conjugated diene units (conjugated diene units except 1,4-bonded conjugated diene units) relative to the total of isoprene units, butadiene units and conjugated diene (b1) units other than isoprene and butadiene units in the modified liquid diene rubber taken as 100 mol%. The vinyl content may be determined by $^1$H-NMR based on the area ratio of the peaks assigned to 1, 2-bonded or 3,4-bonded conjugated diene units and the peak assigned to 1,4-bonded conjugated diene

units.

If the vinyl content is above 70 mol%, the modified liquid diene rubber (B) comes to exhibit a poor compatibility with the solid rubber (A) and fails to allow the filler (C) to be dispersed in the rubber composition in a state that is ideal for a crosslinked product to exhibit desired properties. In such a case, performances such as, for example, rolling resistance performance and steering stability tend to be deteriorated, and a crosslinked product that is obtained tends to have low abrasion resistance.

The vinyl content in the modified liquid diene rubber (B) may be brought to the desired value by, for example, selecting the types of a solvent and an optional polar compound used in the production of the unmodified liquid diene rubber (B'), or controlling the production conditions such as polymerization temperature.

The glass transition temperature (Tg) of the modified liquid diene rubber (B) is not more than 0°C. The glass transition temperature (Tg) is variable depending on factors such as the vinyl content in the isoprene units, butadiene units and conjugated diene (b1) units, the type of the conjugated diene (b1) and the content of units derived from monomers other than the conjugated dienes, but, from the points of view of abrasion resistance, ice grip performance and rolling resistance performance, is preferably not more than -10°C, more preferably not more than -20°C, still more preferably not more than-30°C, further preferably not more than -40°C, furthermore preferably not more than -50°C, particularly preferably not more than -60°C, and most preferably not more than -70°C. From the points of view of steering stability, dry grip performance and wet grip performance, the glass transition temperature (Tg) of the modified liquid diene rubber (B) is preferably not less than -100°C, more preferably not less than -90°C, still more preferably not less than -70°C, further preferably not less than -60°C, particularly preferably not less than -40°C, and most preferably not less than -20°C. When the Tg is in the above range, for example, a tire including a crosslinked product of the rubber composition attains good rolling resistance performance and also exhibits enhanced flexibility at low temperatures with the result that ice grip performance is enhanced. Further, an excessive increase in viscosity can be avoided, and the material can be handled easily.

The modified liquid diene rubbers (B) may be used singly, or two or more may be used in combination.

In the modified liquid diene rubber (B), the catalyst residue content ascribed to the polymerization catalyst used in the production of the rubber is preferably in the range of 0 to 200 ppm in terms of metal. When, for example, the polymerization catalyst used for the production of the unmodified liquid diene rubber (B'), which is the raw material for the modified liquid diene rubber (B), is an organoalkali metal such as an organolithium compound, the metal based on which the catalyst residue content is determined is the alkali metal such as lithium. The catalyst residue content in the above range ensures that a decrease in tackiness during processing or the like will be avoided and that the rubber composition of the invention will give crosslinked products attaining enhancements in heat resistance and rolling resistance performance of tires. The catalyst residue content ascribed to the polymerization catalyst used in the production of the modified liquid diene rubber (B) is more preferably 0 to 150 ppm, and still more preferably 0 to 100 ppm in terms of metal. The catalyst residue content may be measured with, for example, a polarized Zeeman atomic absorption spectrophotometer.

For example, the catalyst residue content in the liquid diene rubber may be controlled to the above specific range by purifying the modified liquid diene rubber (B) or the unmodified liquid diene rubber (B') as the raw material to remove sufficiently the catalyst residue. The purification method is preferably washing with water or warm water, an organic solvent such as methanol or acetone, or supercritical fluid carbon dioxide. From the economic viewpoint, the number of washing operations is preferably 1 to 20 times, and more preferably 1 to 10 times. The washing temperature is preferably 20 to 100°C, and more preferably 40 to 90°C. Prior to the polymerization reaction, the monomers may be purified by distillation or with an adsorbent to remove impurities that will inhibit the polymerization. Such purification allows the polymerization to take place with a reduced amount of the polymerization catalyst, thus making it possible to reduce the catalyst residue content. From the similar viewpoint, the catalyst residue content in the inventive tire rubber composition including the solid rubber (A), the modified liquid diene rubber (B) and the filler (C) is preferably 0 to 200 ppm, more preferably 0 to 150 ppm, and still more preferably 0 to 100 ppm in terms of metal. In this case, the catalyst residue content may include a catalyst residue content ascribed to the polymerization catalyst used in the production of the solid rubber (A), the modified liquid diene rubber (B) and/or other components optionally used in the tire rubber composition.

In the tire rubber composition of the invention, the content of the modified liquid diene rubber (B) is 0.1 to 50 parts by mass per 100 parts by mass of the solid rubber (A), and is preferably 0.1 to 45 parts by mass, more preferably 0.5 to 40 parts by mass, still more preferably 1 to 40 parts by mass, further preferably 2 to 40 parts by mass, particularly preferably 2 to 30 parts by mass, and most preferably 2 to 20 parts by mass. This content of the modified liquid diene rubber (B) ensures that the filler (C) will attain enhanced dispersibility in the rubber composition and that crosslinked products which are obtained will exhibit enhanced abrasion resistance and, when used in, for example, tires and the like, will show good performances such as rolling resistance performance and steering stability.

[Fillers (C)]

The filler (C) used in the tire rubber composition of the invention is not particularly limited and may be any of fillers generally used in tire rubber compositions. For example, to obtain enhanced properties such as mechanical strength and to ensure that tires including the tire rubber composition as portions thereof will attain enhancements in dry grip performance, wet grip performance, steering stability and low fuel consumption performance, the filler (C) is preferably at least one selected from carbon blacks and silicas.

Examples of the carbon blacks include furnace blacks, channel blacks, thermal blacks, acetylene blacks and Ketjen blacks . From points of view such as enhancing the crosslinking rate, enhancing the mechanical strength of crosslinked products which are obtained, and enhancing the dry grip performance, wet grip performance, steering stability and low fuel consumption performance of tires including the tire rubber composition as portions thereof, furnace blacks are preferable among the above carbon blacks. The carbon blacks may be used singly, or two or more may be used in combination.

To attain enhancements in dry grip performance, wet grip performance and low fuel consumption performance of tires including the tire rubber composition as portions thereof, the average particle diameter of the carbon blacks is preferably not less than 5 nm, more preferably not less than 10 nm, and still more preferably not less than 15 nm, and is preferably not more than 100 nm, more preferably not more than 80 nm, still more preferably not more than 70 nm, and further preferably not more than 60 nm. The average particle diameter of the carbon blacks may be determined by measuring the diameters of the particles with a transmission electron microscope and calculating the average of the diameters.

Examples of the commercially available furnace blacks include "DIABLACK" manufactured by Mitsubishi Chemical Corporation and "SEAST" manufactured by Tokai Carbon Co. , Ltd. Examples of the commercially available acetylene blacks include "DENKA BLACK" manufactured by Denka Company Limited. Examples of the commercially available Ketjen blacks include "ECP600JD" manufactured by Lion Specialty Chemicals Co. , Ltd.

To attain enhancements in properties such as the wettability and dispersibility with respect to the solid rubber (A), the carbon blacks may be treated with acids such as nitric acid, sulfuric acid, hydrochloric acid and mixed acids of these acids, or may be subjected to surface oxidation treatment by heating in the presence of air. To enhance the mechanical strength of the inventive tire rubber composition and crosslinked products obtained from the composition, the carbon blacks may be heat treated at 2,000 to 3,000°C in the presence of a graphitization catalyst. Preferred examples of the graphitization catalysts include boron, boron oxides (for example, $B_2O_2$, $B_2O_3$, $B_4O_3$ and $B_4O_5$), boron oxoacids (for example, orthoboric acid, metaboric acid and tetraboric acid) and salts thereof, boron carbides (for example, $B_4C$ and $B_6C$), boron nitride (BN) and other boron compounds.

The carbon blacks may be used after their grain size is adjusted by a technique such as crushing. Examples of the grinders which may be used for the crushing of the carbon blacks include high-speed rotary crushers (hammer mills, pin mills and cage mills), various ball mills (rotary mills, vibration mills and planetary mills) and stirring mills (bead mills, Attritor mills, flow tube type mills and annular mills).

Examples of the silicas include wet silicas (hydrous silicates), dry silicas (silicic anhydrides), calcium silicates and aluminum silicates. Of these silicas, wet silicas are preferable to attain further enhancements in processability, the mechanical strength and abrasion resistance of crosslinked products which are obtained, and the dry grip performance, wet grip performance, steering stability and low fuel consumption performance of tires including the tire rubber composition as portions thereof. The silicas may be used singly, or two or more may be used in combination.

To attain enhancements in the processability of the tire rubber composition, and the dry grip performance, wet grip performance and low fuel consumption performance of tires including the tire rubber composition as portions thereof, the average particle diameter of the silicas is preferably not less than 0.5 nm, more preferably not less than 2 nm, still more preferably not less than 5 nm, further preferably not less than 8 nm, and particularly preferably not less than 10 nm, and is preferably not more than 200 nm, more preferably not more than 150 nm, still more preferably not more than 100 nm, further preferably not more than 50 nm, particularly preferably not more than 30 nm, and most preferably not more than 20 nm. The average particle diameter of the silicas may be determined by measuring the diameters of the particles with a transmission electron microscope and calculating the average of the diameters.

Of the carbon blacks and the silicas described above, the silicas are more preferable as the fillers (C) from points of view such as enhancing the rolling resistance performance of the obtainable rubber composition and crosslinked products thereof.

In the present invention, the tire rubber composition may include a filler other than silicas and carbon blacks for purposes such as to enhance the mechanical strength of tires including the tire rubber composition as portions thereof, and to improve production costs by adding the filler as an extender.

Examples of the fillers other than silicas and carbon blacks include organic fillers, and inorganic fillers such as clays, talcs, micas, calcium carbonate, magnesium hydroxide, aluminum hydroxide, barium sulfate, titanium oxides, glass fibers, fibrous fillers and glass balloons. These fillers may be used singly, or two or more may be used in combination.

The amount of the filler (C) is preferably 20 to 200 parts by mass per 100 parts by mass of the solid rubber (A). When the amount of the filler (C) is in this range, tires including the tire rubber composition as portions thereof attain enhancements in dry grip performance, wet grip performance and low fuel consumption performance. From the above point of view, the amount of the filler (C) per 100 parts by mass of the solid rubber (A) is more preferably not less than 30 parts by mass, still more preferably not less than 40 parts by mass, further preferably not less than 50 parts by mass, and particularly preferably not less than 60 parts by mass, and is preferably not more than 150 parts by mass, more preferably not more than 120 parts by mass, still more preferably not more than 100 parts by mass, even more preferably not more than 90 parts by mass, further preferably not more than 80 parts by mass, and particularly preferably not more than 70 parts by mass.

When the silica is used as the filler (C), the amount of the silica per 100 parts by mass of the solid rubber (A) is preferably not less than 20 parts by mass, more preferably not less than 25 parts by mass, still more preferably not less than 30 parts by mass, further preferably not less than 35 parts by mass, particularly preferably not less than 40 parts by mass, and most preferably not less than 45 parts by mass, and is preferably not more than 100 parts by mass, more preferably not more than 90 parts by mass, still more preferably not more than 80 parts by mass, even more preferably not more than 70 parts by mass, further preferably not more than 65 parts by mass, particularly preferably not more than 60 parts by mass, and most preferably not more than 55 parts by mass, from the point of view of enhancing the dry grip performance, wet grip performance and low fuel consumption performance of tires including the tire rubber composition as portions thereof.

When the carbon black is used as the filler (C), the amount of the carbon black per 100 parts by mass of the solid rubber (A) is preferably not less than 10 parts by mass, more preferably not less than 20 parts by mass, still more preferably not less than 30 parts by mass, and particularly preferably not less than 40 parts by mass, and is preferably not more than 120 parts by mass, more preferably not more than 100 parts by mass, still more preferably not more than 80 parts by mass, even more preferably not more than 70 parts by mass, further preferably not more than 60 parts by mass, particularly preferably not more than 55 parts by mass, and most preferably not more than 50 parts by mass, from the point of view of enhancing the dry grip performance, wet grip performance and low fuel consumption performance of tires including the tire rubber composition as portions thereof.

When the silica and the carbon black are used in combination, the ratio of the silica to the carbon black (mass ratio = silica/carbon black) is preferably 1/99 to 99/1, more preferably 10/90 to 90/10, and still more preferably 30/70 to 80/20.

[Additional components]

When the tire rubber composition of the invention includes silica or the like as the filler (C), it is preferable that the composition further include a silane coupling agent. Examples of the silane coupling agents include sulfide compounds, mercapto compounds, vinyl compounds, amino compounds, glycidoxy compounds, nitro compounds and chloro compounds.

Examples of the sulfide compounds include

bis(3-triethoxysilylpropyl) tetrasulfide,
bis(2-triethoxysilylethyl) tetrasulfide,
bis(3-trimethoxysilylpropyl) tetrasulfide,
bis(2-trimethoxysilylethyl) tetrasulfide,
bis(3-triethoxysilylpropyl) trisulfide,
bis(3-trimethoxysilylpropyl) trisulfide,
bis(3-triethoxysilylpropyl) disulfide,
bis(3-trimethoxysilylpropyl) disulfide,
3-trimethoxysilylpropyl-N,N-dimethylthiocarbamoyl tetrasulfide,
3-triethoxysilylpropyl-N,N-dimethylthiocarbamoyl tetrasulfide,
2-trimethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide and 3-octanoylthio-1-propyltriethoxysilane.

Examples of the mercapto compounds include

3-mercaptopropyltrimethoxysilane,
3-mercaptopropyltriethoxysilane,
2-mercaptoethyltrimethoxysilane and
2-mercaptoethyltriethoxysilane.

Examples of the vinyl compounds include vinyltriethoxysilane and vinyltrimethoxysilane.

Examples of the amino compounds include 3-aminopropyltriethoxysilane, 3-aminopropyltrimethoxysilane, 3-(2-aminoethyl)aminopropyltriethoxysilane and 3-(2-aminoethyl)aminopropyltrimethoxysilane.

Examples of the glycidoxy compounds include

γ-glycidoxypropyltriethoxysilane,
γ-glycidoxypropyltrimethoxysilane,
γ-glycidoxypropylmethyldiethoxysilane and
γ-glycidoxypropylmethyldimethoxysilane.

Examples of the nitro compounds include

3-nitropropyltrimethoxysilane and
3-nitropropyltriethoxysilane.

Examples of the chloro compounds include

3-chloropropyltrimethoxysilane,
3-chloropropyltriethoxysilane,
2-chloroethyltrimethoxysilane and
2-chloroethyltriethoxysilane.

Other compounds may be also used, with examples including octyltriethoxysilane, methyltriethoxysilane, methyltrimethoxysilane and hexadecyltrimethoxysilane.

The silane coupling agents may be used singly, or two or more may be used in combination. Of the above silane coupling agents, sulfur-containing silane coupling agents such as sulfide compounds and mercapto compounds are preferable because of their high reinforcing effects, and bis(3-triethoxysilylpropyl) disulfide, bis(3-triethoxysilylpropyl) tetrasulfide and 3-mercaptopropyltrimethoxysilane are more preferable.

The silane coupling agent is preferably added in an amount of 0.1 to 30 parts by mass, more preferably 0.5 to 20 parts by mass, and still more preferably 1 to 15 parts by mass per 100 parts by mass of the filler (C) . This content of the silane coupling agent ensures that dispersibility, coupling effects, reinforcing effects and abrasion resistance will be enhanced.

The tire rubber composition of the invention may further contain a vulcanizing agent (D) to crosslink the rubber in the composition. Examples of the vulcanizing agents (D) include sulfur and sulfur compounds. Examples of the sulfur compounds include morpholine disulfides and alkylphenol disulfides. The vulcanizing agents (D) may be used singly, or two or more may be used in combination. From the point of view of mechanical properties of crosslinked products, the vulcanizing agent (D) is usually added in an amount of 0.1 to 10 parts by mass, preferably 0.5 to 10 parts by mass, and more preferably 0.8 to 5 parts by mass per 100 parts by mass of the solid rubber (A).

When, for example, the tire rubber composition of the invention contains the vulcanizing agent (D) for crosslinking (vulcanizing) the rubber, the composition may further include a vulcanization accelerator (E). Examples of the vulcanization accelerators (E) include guanidine compounds, sulfenamide compounds, thiazole compounds, thiuram compounds, thiourea compounds, dithiocarbamic acid compounds, aldehyde-amine compounds, aldehyde-ammonia compounds, imidazoline compounds and xanthate compounds. The vulcanization accelerators (E) may be used singly, or two or more may be used in combination. The vulcanization accelerator (E) is usually added in an amount of 0.1 to 15 parts by mass, and preferably 0.1 to 10 parts by mass per 100 parts by mass of the solid rubber (A).

When, for example, the tire rubber composition of the invention contains sulfur, a sulfur compound or the like as the vulcanizing agent (D) for crosslinking (vulcanizing) the rubber, the composition may further include a vulcanization aid (F). Examples of the vulcanization aids (F) include fatty acids such as stearic acid, metal oxides such as zinc oxide, and fatty acid metal salts such as zinc stearate. The vulcanization aids (F) may be used singly, or two or more may be used in combination. The vulcanization aid (F) is usually added in an amount of 0.1 to 15 parts by mass, and preferably 1 to 10 parts by mass per 100 parts by mass of the solid rubber (A) .

Besides the vulcanizing agents, crosslinking agents may be added to the tire rubber composition. Examples of the crosslinking agents include oxygen, organic peroxides, phenolic resins, amino resins, quinone and quinone dioxime derivatives, halogen compounds, aldehyde compounds, alcohol compounds, epoxy compounds, metal halides, organometal halides and silane compounds. These may be used singly, or two or more may be used in combination. The amount of the crosslinking agent is preferably 0.1 to 10 parts by mass per 100 parts by mass of the solid rubber (A).

Where necessary, the tire rubber composition of the invention may include a softener in order to attain improvements in properties such as processability and fluidity while still ensuring that the advantageous effects of the invention

are not impaired. Examples of the softeners include process oils such as silicone oils, aromatic oils, TDAEs (treated distilled aromatic extracts), MESs (mild extracted solvates), RAEs (residual aromatic extracts), paraffin oils and naphthenic oils, and resin components such as aliphatic hydrocarbon resins, alicyclic hydrocarbon resins, C9 resins, rosin resins, coumarone-indene resins and phenolic resins. When the tire rubber composition of the invention contains the process oil as the softener, the content thereof from the point of view of bleeding resistance is preferably not more than 50 parts by mass, more preferably not more than 30 parts by mass, and still more preferably not more than 15 parts by mass per 100 parts by mass of the solid rubber (A).

The tire rubber composition of the invention may contain additives as required in order to attain enhancements in properties such as weather resistance, heat resistance and oxidation resistance, while still achieving the advantageous effects of the invention. Examples of such additives include antioxidants, oxidation inhibitors, waxes, lubricants, light stabilizers, scorch inhibitors, processing aids, colorants such as pigments and coloring matters, flame retardants, antistatic agents, matting agents, antiblocking agents, UV absorbers, release agents, foaming agents, antibacterial agents, mildew-proofing agents and perfumes.

Examples of the oxidation inhibitors include hindered phenol compounds, phosphorus compounds, lactone compounds and hydroxyl compounds.

Examples of the antioxidants include amine-ketone compounds, imidazole compounds, amine compounds, phenolic compounds, sulfur compounds and phosphorus compounds. The additives may be used singly, or two or more may be used in combination.

[Methods for producing tire rubber compositions]

The tire rubber composition of the invention may be produced by any methods without limitation as long as the components described hereinabove can be mixed together homogeneously. Examples of the apparatuses used in the production of the tire rubber composition include tangential or intermeshing internal kneaders such as kneader-ruders, Brabender mixers, Banbury mixers and internal mixers, single-screw extruders, twin-screw extruders, mixing rolls and rollers. The production of the rubber composition may be usually carried out at a temperature in the range of 50 to 270°C.

The tire rubber composition of the invention is preferably used as a crosslinked product (vulcanized rubber) by being crosslinked. The vulcanization conditions and methods are not particularly limited, but the composition is preferably vulcanized with a vulcanization mold under conditions where the vulcanization temperature is 120 to 200°C and the vulcanization pressure is 0.5 to 20 MPa.

The crosslinked products are preferably such that the modified liquid diene rubber (B) is extracted therefrom with an extraction ratio of not more than 20 mass%, more preferably not more than 15 mass%, and still more preferably not more than 10 mass%.

The extraction ratio may be calculated by soaking 2 g of the crosslinked product into 400 ml of toluene at 23°C for 48 hours and determining the amount of the modified liquid diene rubber (B) extracted into toluene.

[Tire treads and pneumatic tires]

The tire tread of the present invention includes the tire rubber composition as at least a portion thereof, and has excellent rolling resistance performance and outstanding steering stability. The structure of the tire tread of the invention is not particularly limited, and may be a monolayer structure or a multilayer structure. In the case of a multilayer structure, the tire rubber composition is preferably used in the layer that is placed in contact with the road surface.

The pneumatic tire of the present invention includes the tire rubber composition as at least a portion thereof, and is, in particular, preferably a pneumatic tire including the tire tread described above. The pneumatic tire of the invention, by virtue of its containing the tire rubber composition as a portion thereof, has enhanced rolling resistance performance and steering stability, and also exhibits outstanding abrasion resistance. The pneumatic tires are preferably snow tires such as winter tires and studless tires, and all-season tires.

Examples of the portions of tires in which the rubber composition and crosslinked products of the rubber composition may be used include treads (cap treads, undertreads), sidewalls, rubber reinforcing layers (such as liners) for runflat tires, rim cushions, bead fillers, bead insulations, bead apexes, clinch apexes, belts, belt cushions, breakers, breaker cushions, chafers, chafers pads and strip apexes.

EXAMPLES

The present invention will be described in further detail by presenting Examples hereinbelow without limiting the scope of the invention to such Examples.

The following are the components used in Examples and Comparative Examples.

〈Components (A)〉

Natural rubber (NR) : STR20 (natural rubber from Thailand), glass transition temperature -63°C
Butadiene rubber (BR): JSR BR01 manufactured by JSR Corporation, weight average molecular weight 550,000, cis content 95 mass%, glass transition temperature -103°C
SBR (1) : Emulsion-polymerized styrene butadiene rubber, JSR1500 (manufactured by JSR Corporation), weight average molecular weight 450,000, styrene content 23.5 mass%, glass transition temperature -52°C
SBR (2) : Solution-polymerized styrene butadiene rubber, HPR355 (manufactured by JSR Corporation), coupled with alkoxysilane introduced at molecular terminal, styrene content 28 mass%, vinyl content 56 mass%, glass transition temperature -27°C

〈Components (B)〉

Modified liquid diene rubbers obtained in Production Examples 1 and 3 to 5 described later, and an unmodified liquid diene rubber obtained in Production Example 2 described later

(Components (C))

Silica: ULTRASIL 7000GR (wet silica) manufactured by Evonik Degussa Japan, average particle diameter 14 nm
Carbon black: DIABLACK I manufactured by Mitsubishi Chemical Corporation, average particle diameter 20 nm

〈Component (X)〉

The following component (X) was used as a makeup for the comparison of the components (B).
TDAE: VivaTec 500 manufactured by H&R

〈Other components〉

Silane coupling agent (1): Si-75 manufactured by Evonik Degussa Japan
Silane coupling agent (2): NXT SILANE manufactured by Momentive Performance Materials
Sulfur: Sulfur fine powder 200 mesh manufactured by Tsurumi Chemical Industry Co., Ltd.
Vulcanization accelerator (1): Nocceler CZ-G manufactured by Ouchi Shinko Chemical Industrial Co., Ltd.
Vulcanization accelerator (2): Nocceler D manufactured by Ouchi Shinko Chemical Industrial Co., Ltd.
Vulcanization accelerator (3): Nocceler TBT-N manufactured by Ouchi Shinko Chemical Industrial Co., Ltd.
Stearic acid: LUNAC S-20 manufactured by Kao Corporation
Zinc oxide: Zinc oxide manufactured by Sakai Chemical Industry Co., Ltd.
Antioxidant (1): Nocrac 6C manufactured by Ouchi Shinko Chemical Industrial Co., Ltd.
Antioxidant (2): ANTAGE RD manufactured by Kawaguchi Chemical Industry Co., LTD.
Wax: SUNTIGHT S manufactured by Seiko Chemical Co., Ltd.

(Production Example 1) Production of modified liquid diene rubber (B-1)

A thoroughly dried 5 L autoclave was purged with nitrogen and was loaded with 1280 g of cyclohexane and 66 g of sec-butyllithium (a 10.5 mass% cyclohexane solution). The temperature was increased to 50°C. While performing stirring, 1350 g of butadiene was added stepwise while controlling the polymerization temperature at 50°C. Under such conditions, the polymerization was performed for 1 hour. The polymerization reaction was terminated by the addition of methanol. A polymer solution was thus obtained. Water was added to the polymer solution, and the mixture was stirred to wash the polymer solution with water. The stirring was terminated. After the liquid had separated into the polymer solution phase and the aqueous phase, the water was removed. After the completion of washing, the polymer solution was vacuum dried at 70°C for 24 hours to afford an unmodified liquid diene rubber (B'-1).
Subsequently, a 1 L-volume autoclave was loaded with 700 g of the unmodified liquid diene rubber (B' -1) obtained above, and the system was deaerated with nitrogen while performing stirring at 60°C for 3 hours. There were

added 1.0 g of 1,1-bis(t-hexylperoxy)cyclohexane and 50 g of (3-mercaptopropyl)triethoxysilane. The reaction was performed at 105°C for 8 hours. A modified liquid diene rubber (B-1) was thus obtained.

(Production Example 2) Production of unmodified liquid diene rubber (B'-2)

A thoroughly dried 5 L autoclave was purged with nitrogen and was loaded with 1280 g of cyclohexane and 66 g of sec-butyllithium (a 10.5 mass% cyclohexane solution). The temperature was increased to 50°C. While performing stirring, 1350 g of butadiene was added stepwise while controlling the polymerization temperature at 50°C. Under such conditions, the polymerization was performed for 1 hour. The polymerization reaction was terminated by the addition of methanol. A polymer solution was thus obtained. Water was added to the polymer solution, and the mixture was stirred to wash the polymer solution with water. The stirring was terminated. After the liquid had separated into the polymer solution phase and the aqueous phase, the water was removed. After the completion of washing, the polymer solution was vacuum dried at 70°C for 24 hours to afford an unmodified liquid diene rubber (B' -2) .

Properties of the materials such as modified liquid diene rubbers obtained in Production Examples were measured and calculated by the following methods.

(Method for measuring weight average molecular weight)

The Mw of the modified liquid diene rubbers (B) was measured by GPC (gel permeation chromatography) relative to standard polystyrenes. The measurement involved the following apparatus and conditions.

· Apparatus: GPC apparatus "GPC 8020" manufactured by TOSOH CORPORATION
· Separation column: "TSKgel G4000HXL" manufactured by TOSOH CORPORATION
· Detector: "RI-8020" manufactured by TOSOH CORPORATION
· Eluent: Tetrahydrofuran
· Eluent flow rate: 1.0 mL/min
· Sample concentration: 5 mg/10 mL
· Column temperature: 40°C

(Vinyl content)

The vinyl content of the modified liquid diene rubbers (B) was measured with $^1$H-NMR (500 MHz) manufactured by JEOL Ltd. The concentration was sample/deuterated chloroform = 50 mg/l mL. The number of scans was 1024. With respect to the spectrum obtained, the vinyl content was calculated from the ratio of the area of the double-bond peak assigned to the vinylated diene compound to the area of the double-bond peak assigned to the non-vinylated diene compound.

(Glass transition temperature)

A 10 mg portion of the modified liquid diene rubber (B) was placed into an aluminum pan and was analyzed by differential scanning calorimetry (DSC) at a heat-up rate of 10°C/min. With respect to the thermogram obtained, the peak top value of the DDSC curve was adopted as the glass transition temperature (Tg) .

(Method for measuring melt viscosity at 38°C)

The melt viscosity of the modified liquid diene rubbers (B) at 38°C was measured with a Brookfield viscometer (manufactured by BROOKFIELD ENGINEERING LABS. INC.).

(Average number of functional groups per molecule of modified liquid diene rubber (B))

The average number of functional groups per molecule of the modified liquid diene rubber (B) may be calculated from the functional group equivalent weight (g/eq) and the styrene equivalent number average molecular weight Mn of the modified liquid diene rubber (B).

(Average number of functional groups per molecule) = [(Number average molecular weight Mn)/(Molecular weight of styrene unit) × (Average molecular weight of units of conjugated diene and optional monomers other than conjugated dienes)]/(Functional group equivalent weight)

The functional group equivalent weight of the modified liquid diene rubber (B) indicates the mass of butadiene and optional monomers other than butadiene that are bonded together per one functional group. The functional group equivalent weight may be calculated from the ratio of the area of the peak assigned to the functional groups to the area of the peak assigned to the polymer main chains using $^1$H-NMR or $^{13}$C-NMR. The peak assigned to the functional groups is a peak assigned to alkoxy groups.

Table 1 below describes the properties of the modified liquid diene rubber (B-1) obtained in Production Example 1 and the unmodified liquid diene rubber (B'-2) obtained in Production Example 2.

Table 1

| | Modified liquid diene rubber | Weight average molecular weight ($\times 10^3$) | Vinyl content (mol%) | Tg (°C) | Melt viscosity (38°C) (Pa·s) | Average number of functional groups per molecule (groups) |
|---|---|---|---|---|---|---|
| Production Example 1 | Modified liquid diene rubber (B-1) | 30 | 10 | -88 | 90 | 4 |
| Production Example 2 | Liquid diene rubber (B'-2) | 30 | 10 | -94 | 40 | 0 |

〈Production Example 3〉 Production of modified liquid diene rubber (B-3)

A thoroughly dried 5 L autoclave was purged with nitrogen and was loaded with 1280 g of cyclohexane and 66 g of sec-butyllithium (a 10.5 mass% cyclohexane solution). The temperature was increased to 50 °C. While performing stirring, 1350 g of butadiene was added stepwise while controlling the polymerization temperature at 50°C. Under such conditions, the polymerization was performed for 1 hour. The polymerization reaction was terminated by the addition of methanol. A polymer solution was thus obtained. Water was added to the polymer solution, and the mixture was stirred to wash the polymer solution with water. The stirring was terminated. After the liquid had separated into the polymer solution phase and the aqueous phase, the water was removed. After the completion of washing, the polymer solution was vacuum dried at 70°C for 24 hours to afford an unmodified liquid diene rubber (B' -3) .

Subsequently, a 1 L-volume autoclave was loaded with 700 g of the unmodified liquid diene rubber (B' -3) obtained above, and the system was deaerated with nitrogen while performing stirring at 60°C for 3 hours. There were added 4.1 g of 1,1-bis(t-hexylperoxy)cyclohexane and 198 g of (3-mercaptopropyl)triethoxysilane. The reaction was performed at 105°C for 8 hours. A modified liquid diene rubber (B-3) was thus obtained. The properties of the modified liquid diene rubber (B-3) obtained in Production Example 3 are described in Table 2.

〈Production Example 4〉 Production of modified liquid diene rubber (B-4)

A thoroughly dried 5 L autoclave was purged with nitrogen and was loaded with 1200 g of hexane and 22 g of n-butyllithium (a 17 mass% hexane solution). The temperature was increased to 50°C. While performing stirring, 1460 g of butadiene was added stepwise while controlling the polymerization temperature at 50°C. Under such conditions, the polymerization was performed for 1 hour. The polymerization reaction was terminated by the addition of methanol. A polymer solution was thus obtained. Water was added to the polymer solution, and the mixture was stirred to wash the polymer solution with water. The stirring was terminated. After the liquid had separated into the polymer solution phase and the aqueous phase, the water was removed. After the completion of washing, the polymer solution was vacuum dried at 70°C for 24 hours to afford an unmodified liquid diene rubber (B'-4).

Subsequently, a 1 L-volume autoclave was loaded with 700 g of the unmodified liquid diene rubber (B' -4) obtained above, and the system was deaerated with nitrogen while performing stirring at 60°C for 3 hours. There were added 1.0 g of 1,1-bis(t-hexylperoxy)cyclohexane and 25 g of (3-mercaptopropyl)trimethoxysilane. The reaction was performed at 105°C for 8 hours. A modified liquid diene rubber (B-4) was thus obtained. The properties of the modified liquid diene rubber (B-4) obtained in Production Example 4 are described in Table 2.

〈Production Example 5〉 Production of modified liquid diene rubber (B-5)

A thoroughly dried 5 L autoclave was purged with nitrogen and was loaded with 1700 g of cyclohexane and 48 g of n-butyllithium (a 17 mass% hexane solution). The temperature was increased to 50°C. While performing stirring, 3 g of N,N,N',N'-tetramethylethylenediamine was added and thereafter 1990 g of butadiene was added stepwise while controlling the polymerization temperature at 50°C. Under such conditions, the polymerization was performed for 1 hour. The polymerization reaction was terminated by the addition of methanol. A polymer solution was thus obtained. Water was added to the polymer solution, and the mixture was stirred to wash the polymer solution with water. The stirring was terminated. After the liquid had separated into the polymer solution phase and the aqueous phase, the water was removed. After the completion of washing, the polymer solution was vacuum dried at 70°C for 24 hours to afford an unmodified liquid diene rubber (B' -5) .

Subsequently, a 1 L-volume autoclave was loaded with 700 g of the unmodified liquid diene rubber (B' -5) obtained above, and the system was deaerated with nitrogen while performing stirring at 60°C for 3 hours. There were added 1.0 g of 1,1-bis(t-hexylperoxy)cyclohexane and 46 g of (3-mercaptopropyl)triethoxysilane. The reaction was performed at 105°C for 8 hours. A modified liquid diene rubber (B-5) was thus obtained. The properties of the modified liquid diene rubber (B-5) obtained in Production Example 5 are described in Table 2.

[Table 2]

| | Modified liquid diene rubber | Weight average molecular weight ($\times 10^3$) | Vinyl content (mol%) | Tg (°C) | Melt viscosity (38°C) (Pa·s) | Average number of functional groups per molecule (groups) |
|---|---|---|---|---|---|---|
| Production Example 3 | Modified liquid diene rubber (B-3) | 33 | 10 | -90 | 250 | 16 |
| Production Example 4 | Modified liquid diene rubber (B-4) | 55 | 10 | -90 | 460 | 4 |
| Production Example 5 | Modified liquid diene rubber (B-5) | 41 | 63 | -50 | 525 | 4 |

Example 1 and Comparative Examples 1 and 2

The solid rubbers (A), the modified liquid diene rubber (B) (the unmodified liquid diene rubber in Comparative Example 1, and no liquid diene rubber in Comparative Example 2), the fillers (C), TDAE, the silane coupling agent, zinc oxide, stearic acid, the wax and the antioxidants were added in the amounts (parts by mass) described in Table 3 into an internal Banbury mixer and were kneaded together for 6 minutes from a start temperature of 60°C to a resin temperature of 150°C. Thereafter, the kneaded mixture was removed from the mixer and was cooled to room temperature. Next, the mixture was placed into the Banbury mixer again, and the vulcanizing agent (sulfur) and the vulcanization accelerators were added. The resultant mixture was kneaded for 75 seconds from a start temperature of 50°C to a maximum temperature of 100°C. A rubber composition was thus obtained.

The rubber composition obtained was subjected to press forming (145°C, 20 to 40 minutes) to give a vulcanized rubber sheet (2 mm in thickness) and a cylindrical test piece for friction coefficient measurement (16 mm in width, 80 mm in diameter) . The abrasion resistance, the ice grip performance, the low fuel consumption performance and the steering stability were evaluated by the methods described below. The results are described in Table 3.

The measurement methods for evaluations are described below.

(Abrasion resistance)

The DIN abrasion loss was measured with a load of 10 N and an abrasion distance of 40 m in accordance with JIS K 6264. The data of Example and Comparative Examples in Table 3 are values relative to the reciprocal of the DIN abrasion loss obtained in Comparative Example 2 in Table 3 taken as 100. The larger the value, the smaller the abrasion loss and the more excellent the abrasion resistance.

(On-ice friction coefficient (μ))

The on-ice friction coefficient (μ) was evaluated as an index of ice grip performance of the rubber composition.
The cylindrical test piece for friction coefficient measurement obtained in Example or Comparative Example was tested to measure the on-ice friction coefficient. The measurement apparatus and conditions are as follows.
The friction coefficient was measured in the range of slip ratio between the tire and the road surface of 0 to 40%. The maximum value of friction coefficient obtained was adopted as the on-ice friction coefficient (μ). The larger the value of on-ice friction coefficient (μ), the higher the ice grip performance. The data of ice grip performance in Table 3 are values relative to the value of Comparative Example 2 taken as 100.

[Measurement apparatus and measurement conditions]

· Apparatus: RTM friction tester manufactured by Ueshima Seisakusho Co., Ltd.
-Measurement temperature: -3.0°C
-Road surface: Ice
· Speed: 30 km/hrs
· Load: 50 N
· Slip ratio: 0-40%

(Low fuel consumption performance)

The sheet of the rubber composition prepared in Example or Comparative Example was cut to give a test piece 40 mm in length and 5 mm in width. The test piece was tested on a dynamic viscoelastometer manufactured by GABO GmbH at a measurement temperature of 60°C, a frequency of 10 Hz, a static strain of 10% and a dynamic strain of 2% to determine tanδ as an index of low fuel consumption performance. The data obtained in Example and Comparative Examples are values relative to the value of Comparative Example 2 in Table 3 taken as 100. The smaller the value, the more excellent the low fuel consumption performance of the rubber composition.

(Steering stability)

The vulcanized rubber sheet of the rubber composition prepared in Example or Comparative Example was cut to give a test piece 40 mm in length and 5 mm in width. The test piece was tested on a dynamic viscoelastometer manufactured by GABO GmbH at a measurement temperature of 25°C or 60°C, a frequency of 10 Hz, a static strain of 10% and a dynamic strain of 2% to determine E' (storage modulus) as an index of rigidity. The data obtained in Example and Comparative Examples are values relative to the value of Comparative Example 2 in Table 3 taken as 100. With increasing magnitude of the value, the rubber composition has higher rigidity, exhibits a smaller deformation, and thus attains more excellent steering stability.

[Table 3]

| | | | Ex. 1 | Comp. Ex. 1 | Comp. Ex. 2 |
|---|---|---|---|---|---|
| Amounts (parts by mass) | Components (A) | NR | 60 | 60 | 60 |
| | | BR | 40 | 40 | 40 |
| | Components (B) | Modified liquid diene rubber (B-1) | 6 | | |
| | | Liquid diene rubber (B'-2) | | 6 | |
| | Components (C) | Silica | 80 | 80 | 80 |
| | | Carbon black | 10 | 10 | 10 |
| | Optional components | TDAE | 14 | 14 | 20 |
| | | Silane coupling agent (1) | 6.4 | 6.4 | 6.4 |
| | | Zinc oxide | 3.5 | 3.5 | 3.5 |
| | | Stearic acid | 2.0 | 2.0 | 2.0 |
| | | Antioxidant (1) | 1.0 | 1.0 | 1.0 |
| | | Antioxidant (2) | 1.5 | 1.5 | 1.5 |
| | | Wax | 1.5 | 1.5 | 1.5 |
| | | Sulfur | 1.50 | 1.50 | 1.50 |
| | | Vulcanization accelerator (1) | 1.50 | 1.50 | 1.50 |
| | | Vulcanization accelerator (2) | 1.00 | 1.00 | 1.00 |
| | Abrasion resistance (relative value) | | 127 | 117 | 100 |
| | Ice grip performance | | 102 | 100 | 100 |
| | Low fuel consumption performance | | 94 | 107 | 100 |
| | Storage modulus (25°C) | | 110 | 99 | 100 |
| | Storage modulus (60°C) | | 111 | 97 | 100 |

As compared to Comparative Examples 1 and 2, Example 1 which involved the modified liquid diene rubber achieved excellent abrasion resistance and low fuel consumption performance without deteriorations in ice grip performance. Further, the rubber composition exhibited a high storage modulus at both 25°C and 60°C and thus attained excellent steering stability, and also had a small temperature dependence of storage modulus.

Examples 3 to 7 and Comparative Examples 3 and 4

The solid rubbers (A), the modified liquid diene rubber (B) (the unmodified liquid diene rubber in Comparative Example 3, and no liquid diene rubber in Comparative Example 4), the fillers (C), TDAE, the silane coupling agent, zinc oxide, stearic acid, the wax and the antioxidants were added in the amounts (parts by mass) described in Table 4 into an internal Banbury mixer and were kneaded together for 6 minutes from a start temperature of 60°C to a resin temperature of 150°C. Thereafter, the kneaded mixture was removed from the mixer and was cooled to room temperature. Next, the mixture was placed into the Banbury mixer again, and the vulcanizing agent (sulfur) and the vulcanization accelerators were added. The resultant mixture was kneaded for 75 seconds from a start temperature of 50°C to a maximum temperature of 100°C. A rubber composition was thus obtained.

The rubber composition obtained was subjected to press forming (145°C and 20 to 40 minutes in Table 4, and 160°C and 20 to 40 minutes in Tables 5, 6 and 7) to give a vulcanized rubber sheet (2 mm in thickness) and a cylindrical test piece for friction coefficient measurement (16 mm in width, 80 mm in diameter). The abrasion resistance, the ice grip performance, the low fuel consumption performance and the steering stability were evaluated in the similar manner as described hereinabove. Further, the wet grip performance was evaluated by the measurement method described below. The evaluation results are described in Table 4 as values relative to the values of Comparative Example 4 taken

as 100.

(Wet surface friction coefficient (μ))

The wet surface friction coefficient (μ) was evaluated as an index of wet grip performance of the rubber composition.

The cylindrical test piece for friction coefficient measurement obtained in Example or Comparative Example was tested to measure the wet surface friction coefficient. The measurement apparatus and conditions are as follows.

The friction coefficient was measured in the range of slip ratio between the tire and the road surface of 0 to 40%. The maximum value of friction coefficient obtained was adopted as the wet surface friction coefficient (μ) . The larger the value of wet surface friction coefficient (μ), the higher the wet grip performance. The data of wet grip performance in Table 4 are values relative to the value of Comparative Example 4 taken as 100.

[Measurement apparatus and measurement conditions]

· Apparatus: RTM friction tester manufactured by Ueshima Seisakusho Co., Ltd.
· Measurement temperature: 20°C
· Road surface: METABRIT manufactured by NORITAKE COATED ABRASIVE CO., LTD., grain size 120, abrasive grain A
· Amount of water supplied to road surface: 0.5 L/min

- Temperature of water supplied to road surface: 20°C
- Speed: 30 km/hrs

· Load: 50 N
· Slip ratio: 0-40%

[Table 4]

| | | | Ex. 3 | Ex. 4 | Ex. 5 | Ex. 6 | Ex. 7 | Comp. Ex. 3 | Comp. Ex. 4 |
|---|---|---|---|---|---|---|---|---|---|
| Amounts (parts by mass) | Components (A) | NR | 60 | 60 | 60 | 60 | 60 | 60 | 60 |
| | | BR | 40 | 40 | 40 | 40 | 40 | 40 | 40 |
| | Components (B) | Modified liquid diene rubber (B-1) | 12 | 18 | | | | | |
| | | Modified liquid diene rubber (B-3) | | | 6 | | | | |
| | | Modified liquid diene rubber (B-4) | | | | 6 | | | |
| | | Modified liquid diene rubber (B-5) | | | | | 6 | | |
| | | Liquid diene rubber (B'-2) | | | | | | 6 | |
| | Components (C) | Silica | 80 | 80 | 80 | 80 | 80 | 80 | 80 |
| | | Carbon black | 10 | 10 | 10 | 10 | 10 | 10 | 10 |
| | Optional components | TDAE | 8 | 2 | 14 | 14 | 14 | 14 | 20 |
| | | Silane coupling agent (1) | 6.4 | 6.4 | 6.4 | 6.4 | 6.4 | 6.4 | 6.4 |
| | | Zinc oxide | 3.5 | 3.5 | 3.5 | 3.5 | 3.5 | 3.5 | 3.5 |
| | | Stearic acid | 2 | 2 | 2 | 2 | 2 | 2 | 2 |
| | | Antioxidant (1) | 1 | 1 | 1 | 1 | 1 | 1 | 1 |
| | | Antioxidant (2) | 1.5 | 1.5 | 1.5 | 1.5 | 1.5 | 1.5 | 1.5 |
| | | Wax | 1.5 | 1.5 | 1.5 | 1.5 | 1.5 | 1.5 | 1.5 |
| | | Sulfur | 1.5 | 1.5 | 1.5 | 1.5 | 1.5 | 1.5 | 1.5 |
| | | Vulcanization accelerator (1) | 1.5 | 1.5 | 1.5 | 1.5 | 1.5 | 1.5 | 1.5 |
| | | Vulcanization accelerator (2) | 1 | 1 | 1 | 1 | 1 | 1 | 1 |
| | Abrasion resist ance (relative value) | | 142 | 170 | 119 | 123 | 112 | 121 | 100 |
| | Wet grip perform ance | | 101 | 101 | 104 | 103 | 106 | 101 | 100 |
| | Ice grip perform ance | | 97 | 95 | 115 | 97 | 103 | 101 | 100 |
| | Low fuel consump tion performance | | 91 | 88 | 86 | 96 | 96 | 109 | 100 |
| | Storage modulus (25°C) | | 110 | 120 | 128 | 110 | 110 | 95 | 100 |
| | Storage modulus (60°C) | | 110 | 120 | 128 | 110 | 108 | 93 | 100 |

As compared to Comparative Examples 3 and 4, Examples 3 to 7 which involved the modified liquid diene rubber achieved excellent wet grip performance, low fuel consumption performance and abrasion resistance without deteriorations in ice grip performance. Further, the rubber compositions exhibited a high storage modulus at both 25°C and 60°C and thus attained excellent steering stability, and also had a small temperature dependence of storage modulus.

Example 8 and Comparative Example 5

A rubber composition according to the formulation (parts by mass) described in Table 5, a vulcanized rubber sheet and a cylindrical test piece for friction coefficient measurement (16 mm in width, 80 mm in diameter) were prepared in the same manner as in Example 3 (no modified liquid diene rubber was added in Comparative Example 5) . The abrasion resistance, the wet grip performance, the ice grip performance, the low fuel consumption performance and the steering stability were evaluated in the similar manner as described hereinabove. The evaluation results are described in Table 5 as values relative to the values of Comparative Example 5 taken as 100.

[Table 5]

| | | | Ex. | Comp. Ex. |
|---|---|---|---|---|
| | | | 8 | 5 |
| Amounts (parts by mass) | Components (A) | SBR (1) | 70 | 70 |
| | | NR | 30 | 30 |
| | Component (B) | Modified liquid diene rubber (B-1) | 20 | |
| | Components (C) | Silica | 80 | 80 |
| | | Carbon black | 10 | 10 |
| | Optional components | TDAE | 10 | 30 |
| | | Silane coupling agent (1) | 6.4 | 6.4 |
| | | Zinc oxide | 3.5 | 3.5 |
| | | Stearic acid | 2 | 2 |
| | | Antioxidant (1) | 2 | 2 |
| | | Wax | 1 | 1 |
| | | Sulfur | 1.5 | 1.5 |
| | | Vulcanization accelerator (1) | 0.45 | 0.45 |
| | | Vulcanization accelerator (2) | 0.65 | 0.65 |
| | | Vulcanization accelerator (3) | 1 | 1 |
| | Abrasion resistance (relative value) | | 220 | 100 |
| | Wet grip performance | | 93 | 100 |
| | Ice grip performance | | 124 | 100 |
| | Low fuel consumption performance | | 73 | 100 |
| | Storage modulus (25°C) | | 128 | 100 |
| | Storage modulus (60°C) | | 134 | 100 |

As compared to Comparative Example 5, Example 8 which involved the modified liquid diene rubber achieved excellent abrasion resistance, ice grip performance and low fuel consumption performance without deteriorations in wet grip performance. Further, the rubber composition exhibited a high storage modulus at both 25°C and 60°C and thus attained excellent steering stability, and also had a small temperature dependence of storage modulus.

Example 9 and Comparative Example 6

A rubber composition according to the formulation (parts by mass) described in Table 6, and a vulcanized rubber sheet were prepared in the same manner as in Example 3 (no modified liquid diene rubber was added in Comparative Example 6), except that the mixture was kneaded for 6 minutes to a resin temperature of 165°C. The abrasion resistance and the low fuel consumption performance were evaluated in the similar manner as described hereinabove. Further, the on-ice performance was evaluated by the following measurement method. The evaluation results are described in Table 6 as values relative to the values of Comparative Example 6 taken as 100.

(On-ice performance)

The vulcanized rubber sheet of the rubber composition prepared in Example or Comparative Example was cut to give a test piece 40 mm in length and 5 mm in width. The test piece was tested on a dynamic viscoelastometer manufactured by GABO GmbH at a measurement temperature of -20°C, 10 Hz, a static strain of 10% and a dynamic strain of 2% to determine E' (storage modulus) as an index of flexibility. The data obtained in Example and Comparative Example are values relative to the value of Comparative Example 6 in Table 6 (Comparative Example 7 in Table 7) taken as 100. With decreasing magnitude of the value, the rubber composition has higher flexibility and exhibits a higher on-ice performance.

[Table 6]

| | | | Ex. | Comp. Ex. |
|---|---|---|---|---|
| | | | 9 | 6 |
| Amounts (parts by mass) | Components (A) | SBR (2) | 80 | 80 |
| | | BR | 20 | 20 |
| | Component (B) | Modified liquid diene rubber (B-1) | 12 | |
| | Component (C) | Silica | 100 | 100 |
| | Optional components | TDAE | 28 | 28 |
| | | Silane coupling agent (2) | 8 | 8 |
| | | Zinc oxide | 3 | 3 |
| | | Stearic acid | 2.5 | 2.5 |
| | | Antioxidant (1) | 2.5 | 2.5 |
| | | Wax | 2 | 2 |
| | | Sulfur | 1.5 | 1.5 |
| | | Vulcanization accelerator (1) | 0.35 | 0.35 |
| | | Vulcanization accelerator (2) | 0.5 | 0.5 |
| | | Vulcanization accelerator (3) | 1.5 | 1.5 |
| | Abrasion resistance (relative value) | | 105 | 100 |
| | Storage modulus (-20°C) | | 22 | 100 |
| | Low fuel consumption performance | | 102 | 100 |

As compared to Comparative Example 6, Example 9 which involved the modified liquid diene rubber achieved excellent abrasion resistance without deteriorations in low fuel consumption performance. Further, the rubber composition exhibited a low storage modulus at -20°C and thus attained excellent on-ice performance.

Example 10 and Comparative Example 7

A rubber composition according to the formulation (parts by mass) described in Table 7, and a vulcanized rubber sheet were prepared in the same manner as in Example 3 (no modified liquid diene rubber was added in Comparative Example 7) . The abrasion resistance, the on-ice performance, the steering stability and the low fuel consumption performance were evaluated in the similar manner as described hereinabove. The evaluation results are described in Table 7 as values relative to the values of Comparative Example 7 taken as 100.

[Table 7]

| | | | Ex. | Comp. Ex. |
|---|---|---|---|---|
| | | | 10 | 7 |
| Amounts (parts by mass) | Components (A) | SBR (2) | 80 | 80 |
| | | BR | 20 | 20 |
| | Component (B) | Modified liquid diene rubber (B-1) | 12 | |
| | Components (C) | Silica | 50 | 50 |
| | | Carbon black | 50 | 50 |
| | Optional components | TDAE | 28 | 40 |
| | | Silane coupling agent (1) | 8 | 8 |
| | | Zinc oxide | 3 | 3 |
| | | Stearic acid | 2.5 | 2.5 |
| | | Antioxidant (1) | 2.5 | 2.5 |
| | | Wax | 2 | 2 |
| | | Sulfur | 1.5 | 1.5 |
| | | Vulcanization accelerator (1) | 0.35 | 0.35 |
| | | Vulcanization accelerator (2) | 0.5 | 0.5 |
| | | Vulcanization accelerator (3) | 1.5 | 1.5 |
| | Abrasion resistance (relative value) | | 103 | 100 |
| | Storage modulus (-20°C) | | 44 | 100 |
| | Storage modulus (25°C) | | 114 | 100 |
| | Storage modulus (60°C) | | 118 | 100 |
| | Low fuel consumption performance | | 90 | 100 |

As compared to Comparative Example 7, Example 10 which involved the modified liquid diene rubber attained excellent low fuel consumption performance without deteriorations in abrasion resistance. Further, the rubber composition exhibited a low storage modulus at -20°C and thus attained excellent on-ice performance. Furthermore, the rubber composition exhibited a high storage modulus at both 25°C and 60°C and thus attained excellent steering stability, and also had a small temperature dependence of storage modulus.

INDUSTRIAL APPLICABILITY

The tire rubber compositions of the present invention have excellent processability and filler dispersibility. Further, when rendered crosslinkable by the addition of a crosslinking agent or the like, the rubber compositions give superior crosslinked products which attain enhancements in properties such as abrasion resistance. Thus, the compositions of the present invention may be suitably used in applications such as tires. In particular, the crosslinked products are useful as tire treads or the like because not only enhanced rolling resistance performance but also enhanced steering stability can be achieved.

**Claims**

**1.** A tire rubber composition comprising 100 parts by mass of a solid rubber (A) having a glass transition temperature (Tg) of not more than -10°C, 0.1 to 50 parts by mass of a modified liquid diene rubber (B) having a functional group derived from a silane compound represented by the formula (1) below, and 20 to 200 parts by mass of a filler (C),

the modified liquid diene rubber (B) satisfying the following (i) to (iv):

(i) the weight average molecular weight (Mw) is 15,000 to 120,000,
(ii) the vinyl content is not more than 70 molt,
(iii) the average number of the functional groups derived from the silane compound represented by the formula (1) below per molecule of the modified liquid diene rubber (B) is 1 to 30, and
(iv) the glass transition temperature (Tg) is not more than 0°C,

[Chem. 1]

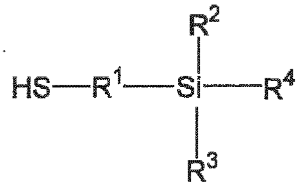

(1)

wherein $R^1$ is a $C_{1-6}$ divalent alkylene group, and $R^2$, $R^3$ and $R^4$ are each independently a methoxy group, an ethoxy group, a phenoxy group, a methyl group, an ethyl group or a phenyl group, with the proviso that at least one of $R^2$, $R^3$ and $R^4$ is a methoxy group, an ethoxy group or a phenoxy group, and
wherein the modified liquid diene rubber (B) is prepared by adding the silane compound represented by the formula (1) to an unmodified liquid diene rubber (B') which is free from modification with other functional groups.

2. The tire rubber composition according to Claim 1, wherein the melt viscosity of the modified liquid diene rubber (B) at 38°C is 1 to 4,000 Pa·s.

3. The tire rubber composition according to Claim 1 or 2, wherein the modified liquid diene rubber (B) is a polymer comprising a monomer unit derived from isoprene and/or butadiene.

4. The tire rubber composition according to any one of Claims 1 to 3, wherein the solid rubber (A) is one or more selected from natural rubbers, styrene butadiene rubbers, butadiene rubbers and isoprene rubbers.

5. The tire rubber composition according to any one of Claims 1 to 4, wherein the filler (C) is at least one selected from carbon blacks and silicas.

6. A crosslinked product obtained by crosslinking the tire rubber composition described in any one of Claims 1 to 5.

7. A tire tread comprising, as at least a portion of the tire tread, the tire rubber composition described in any one of Claims 1 to 5 or the crosslinked product described in Claim 6.

8. A bead filler comprising, as at least a portion of the bead filler, the tire rubber composition described in any one of Claims 1 to 5 or the crosslinked product described in Claim 6.

9. A tire belt comprising, as at least a portion of the tire belt, the tire rubber composition described in any one of Claims 1 to 5 or the crosslinked product described in Claim 6.

10. A pneumatic tire comprising, as at least a portion of the pneumatic tire, the tire rubber composition described in any one of Claims 1 to 5.

11. The pneumatic tire according to Claim 10, wherein the pneumatic tire is a winter tire or a studless tire.

12. The pneumatic tire according to Claim 10, wherein the pneumatic tire is an all-season tire.

**Patentansprüche**

1. Kautschukzusammensetzung für Reifen, umfassend 100 Masseteile eines festen Kautschuks (A) mit einer Glasübergangstemperatur (Tg) von nicht mehr als -10°C, 0,1 bis 50 Masseteile eines modifizierten flüssigen Dienkautschuks (B) mit einer funktionellen Gruppe, die sich von einer durch die nachstehende Formel (1) dargestellten

Silanverbindung ableitet, und 20 bis 200 Masseteile eines Füllstoffs (C),

wobei der modifizierte flüssige Dienkautschuk (B) die folgenden (i) bis (iv) erfüllt:

(i) das gewichtsmittlere Molekulargewicht (Mw) beträgt 15.000 bis 120.000,
(ii) der Vinylgehalt beträgt nicht mehr als 70 Mol-%,
(iii) die durchschnittliche Anzahl der funktionellen Gruppen, die sich von der durch die nachstehende Formel (1) dargestellten Silanverbindung ableiten, pro Molekül des modifizierten flüssigen Dienkautschuks (B) beträgt 1 bis 30, und
(iv) die Glasübergangstemperatur (Tg) beträgt nicht mehr als 0°C,

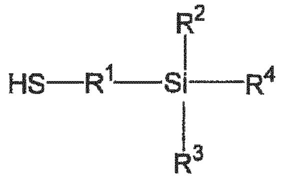
(1)

wobei $R^1$ eine zweiwertige $C_{1-6}$-Alkylengruppe ist und $R^2$, $R^3$ und $R^4$ jeweils unabhängig voneinander eine Methoxygruppe, eine Ethoxygruppe, eine Phenoxygruppe, eine Methylgruppe, eine Ethylgruppe oder eine Phenylgruppe sind, mit der Maßgabe, dass mindestens eines von $R^2$, $R^3$ und $R^4$ eine Methoxygruppe, eine Ethoxygruppe oder eine Phenoxygruppe ist, und
wobei der modifizierte flüssige Dienkautschuk (B) durch Zugabe der durch die Formel (1) dargestellten Silanverbindung zu einem unmodifizierten flüssigen Dienkautschuk ($B^1$), der frei von Modifikationen mit anderen funktionellen Gruppen ist, hergestellt wird.

**2.** Kautschukzusammensetzung für Reifen nach Anspruch 1, wobei die Schmelzviskosität des modifizierten flüssigen Dienkautschuks (B) bei 38°C 1 bis 4.000 Pa·s beträgt.

**3.** Kautschukzusammensetzung für Reifen nach Anspruch 1 oder 2, wobei der modifizierte flüssige Dienkautschuk (B) ein Polymer ist, das eine von Isopren und/oder Butadien abgeleitete Monomereinheit umfasst.

**4.** Kautschukzusammensetzung für Reifen nach einem der Ansprüche 1 bis 3, wobei der feste Kautschuk (A) einer oder mehrere aus Naturkautschuken, Styrol-Butadien-Kautschuken, Butadien-Kautschuken und Isopren-Kautschuken ausgewählt ist.

**5.** Kautschukzusammensetzung für Reifen nach einem der Ansprüche 1 bis 4, wobei der Füllstoff (C) mindestens einer ist, ausgewählt aus Rußen und Kieselsäuren.

**6.** Vernetztes Produkt, erhalten durch Vernetzen der in einem der Ansprüche 1 bis 5 beschriebenen Kautschukzusammensetzung für Reifen.

**7.** Reifenlauffläche, die als mindestens einen Teil der Reifenlauffläche die in einem der Ansprüche 1 bis 5 beschriebene Kautschukzusammensetzung für Reifen oder das in Anspruch 6 beschriebene vernetzte Produkt enthält.

**8.** Wulstfüller, der als mindestens einen Teil des Wulstfüllers die in einem der Ansprüche 1 bis 5 beschriebene Kautschukzusammensetzung für Reifen oder das in Anspruch 6 beschriebene vernetzte Produkt enthält.

**9.** Reifengürtel, der als mindestens einen Teil des Reifengürtels die in einem der Ansprüche 1 bis 5 beschriebene Kautschukzusammensetzung für Reifen oder das in Anspruch 6 beschriebene vernetzte Produkt enthält.

**10.** Luftreifen, der als mindestens einen Teil des Luftreifens die in einem der Ansprüche 1 bis 5 beschriebene Kautschukzusammensetzung für Reifen enthält.

**11.** Luftreifen nach Anspruch 10, wobei der Luftreifen ein Winterreifen oder ein spikeloser Reifen ist.

**12.** Luftreifen nach Anspruch 10, wobei der Luftreifen ein Ganzjahresreifen ist.

**Revendications**

1. Composition de caoutchouc pour pneu comprenant 100 parties en masse d'un caoutchouc solide (A) ayant une température de transition vitreuse (Tg) de pas plus de -10 °C, 0,1 à 50 parties en masse d'un caoutchouc de diène liquide modifié (B) ayant un groupe fonctionnel dérivé d'un composé de silane représenté par la formule (1) ci-dessous, et 20 à 200 parties en masse d'une charge (C),

   le caoutchouc de diène liquide modifié (B) satisfaisant les points (i) à (iv) suivants :

   (i) le poids moléculaire moyen en poids (Mw) est de 15 000 à 120 000,
   (ii) la teneur en vinyle n'est pas plus de 70 % en mole,
   (iii) le nombre moyen des groupes fonctionnels dérivés du composé de silane représenté par la formule (1) ci-dessous par molécule du caoutchouc de diène liquide modifié (B) est de 1 à 30, et
   (iv) la température de transition vitreuse (Tg) n'est pas plus de 0 °C,

   [Chim. 1]

   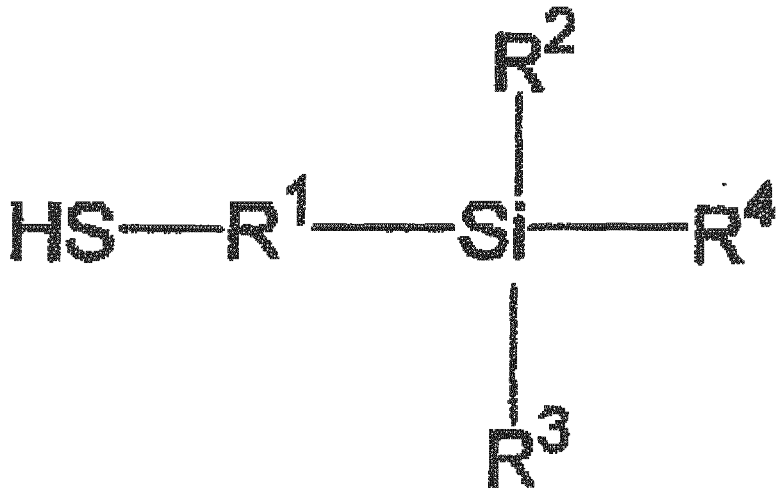

   (1)

   dans laquelle $R^1$ est un groupe alkylène divalent en $C_{1-6}$, et $R^2$, $R^3$ et $R^4$ sont chacun indépendamment un groupe méthoxy, un groupe éthoxy, un groupe phénoxy, un groupe méthyle, un groupe éthyle ou un groupe phényle, à condition qu'au moins un de $R^2$, $R^3$ et $R^4$ soit un groupe méthoxy, un groupe éthoxy ou un groupe phénoxy, et
   dans laquelle le caoutchouc de diène liquide modifié (B) est préparé en ajoutant le composé de silane représenté par la formule (1) à un caoutchouc de diène liquide non modifié (B') qui est exempt de modification avec d'autres groupes fonctionnels.

2. Composition de caoutchouc pour pneu selon la revendication 1, dans laquelle la viscosité à l'état fondu du caoutchouc de diène liquide modifié (B) à 38 °C est de 1 à 4000 Pa·s.

3. Composition de caoutchouc pour pneu selon la revendication 1 ou 2, dans laquelle le caoutchouc de diène liquide modifié (B) est un polymère comprenant une unité monomère dérivée d'isoprène et/ou de butadiène.

4. Composition de caoutchouc pour pneu selon l'une quelconque des revendications 1 à 3, dans laquelle le caoutchouc solide (A) est un ou plusieurs sélectionnés parmi des caoutchoucs naturels, des caoutchoucs de styrène butadiène, des caoutchoucs de butadiène et des caoutchoucs d'isoprène.

5. Composition de caoutchouc pour pneu selon l'une quelconque des revendications 1 à 4, dans laquelle la charge (C) est au moins une sélectionnée parmi des noirs de carbone et des silices.

6. Produit réticulé obtenu en réticulant la composition de caoutchouc pour pneu décrite dans l'une quelconque des

revendications 1 à 5.

7. Bande de roulement comprenant, en tant qu'au moins une portion de la bande de roulement, la composition de caoutchouc pour pneu décrite dans l'une quelconque des revendications 1 à 5 ou le produit réticulé décrit dans la revendication 6.

8. Bourrage sur tringle comprenant, en tant qu'au moins une portion du bourrage sur tringle, la composition de caoutchouc pour pneu décrite dans l'une quelconque des revendications 1 à 5 ou le produit réticulé décrit dans la revendication 6.

9. Ceinture de pneu comprenant, en tant qu'au moins une portion de la ceinture de pneu, la composition de caoutchouc pour pneu décrite dans l'une quelconque des revendications 1 à 5 ou le produit réticulé décrit dans la revendication 6.

10. Bandage pneumatique comprenant, en tant qu'au moins une portion du bandage pneumatique, la composition de caoutchouc pour pneu décrite dans l'une quelconque des revendications 1 à 5.

11. Bandage pneumatique selon la revendication 10, dans lequel le bandage pneumatique est un pneu neige ou un pneu sans clou.

12. Bandage pneumatique selon la revendication 10, dans lequel le bandage pneumatique est un pneu toutes saisons,

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000219778 A
- JP 2014012768 A
- JP 2011132298 A